(19) **Europäisches Patentamt / European Patent Office / Office européen des brevets**

(11) **EP 4 451 744 A1**

(12) **EUROPEAN PATENT APPLICATION**
published in accordance with Art. 153(4) EPC

(43) Date of publication:
**23.10.2024 Bulletin 2024/43**

(21) Application number: **22914850.7**

(22) Date of filing: **28.12.2022**

(51) International Patent Classification (IPC):
***H04W 48/08*** *(2009.01)*

(52) Cooperative Patent Classification (CPC):
**G06N 3/045; G06N 3/047; G06N 3/084;
H04W 36/08; H04W 48/08; H04W 48/16**

(86) International application number:
**PCT/CN2022/142602**

(87) International publication number:
**WO 2023/125598 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2021 CN 202111669057**

(71) Applicant: **Huawei Technologies Co., Ltd.
Shenzhen, Guangdong 518129 (CN)**

(72) Inventors:
• **ZHANG, Gongzheng**
  **Shenzhen, Guangdong 518129 (CN)**
• **QIAO, Yunfei**
  **Shenzhen, Guangdong 518129 (CN)**
• **LI, Rong**
  **Shenzhen, Guangdong 518129 (CN)**
• **WANG, Jian**
  **Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND COMMUNICATION APPARATUS**

(57) This application provides a communication method and a communication apparatus. Therefore, in a scenario in which a network device provides an artificial intelligence (artificial intelligence, AI) service for a terminal device, AI performance information of the network device is used as a basis for determining whether to access the network device, so that the terminal device subsequently accesses a network device with excellent AI performance information, and obtains an excellent AI service. In the method, the terminal device obtains AI model information of a first network device; and the terminal device determines AI performance information of the first network device based on the AI model information of the first network device.

FIG. 4

EP 4 451 744 A1

## Description

This application claims priority to Chinese Patent Application No. 202111669057.7, filed with the China National Intellectual Property Administration on December 30, 2021, and entitled "COMMUNICATION METHOD AND COMMUNICATION APPARATUS", which is incorporated herein by reference in its entirety.

## TECHNICAL FIELD

This application relates to the field of wireless technologies, and in particular, to a communication method and a communication apparatus.

## BACKGROUND

Wireless communication is transmission communication performed between two or more communication nodes without propagation through a conductor or a cable. The communication node generally includes a network device and a terminal device. Generally, the terminal device may access (or camp on) the network device, and receive scheduling and indication information from the network device, to implement wireless communication.

Currently, the terminal device may perform handover, with reference to some mechanisms (for example, cell selection, cell reselection, or cell switching), between network devices accessed by the terminal device. To be specific, the terminal device may use, at different moments based on the mechanisms, different network devices in a plurality of network devices as network devices accessed by the terminal device. A basis for determining a serving network device in the plurality of network devices mainly includes channel quality information for communication between the terminal device and the network device. For example, the signal quality information may include reference signal received power (reference signal receiving power, RSRP), reference signal received quality (reference signal receiving quality, RSRQ), a signal to interference plus noise ratio (signal to interference plus noise ratio, SINR), or the like.

With development of artificial intelligence (artificial intelligence, AI), the network device may also provide an AI service for the terminal device, and different network devices may provide different AI services. However, channel quality of communication between the terminal device and the network device does not completely represent quality of the AI service provided by the network device.

Therefore, in a scenario in which the network device provides the AI service for the terminal device, how the terminal device determines an accessed network device is an urgent technical problem to be resolved.

## SUMMARY

This application provides a communication method and a communication apparatus, to enable a terminal device to obtain an excellent AI service in a scenario in which a network device provides the AI service for the terminal device.

A first aspect of this application provides a communication method. The method is performed by a terminal device, or the method is performed by some components (for example, a processor, a chip, or a chip system) in the terminal device, or the method may be implemented by a logical module or software that can implement all or some functions of the terminal device. In the first aspect and possible implementations of the first aspect, an example in which the communication method is performed by the terminal device is used for description. In the method, the terminal device obtains AI model information of a first network device; and the terminal device determines AI performance information of the first network device based on the AI model information of the first network device.

Based on the foregoing technical solution, after the terminal device obtains the AI model information of the first network device, the terminal device determines the AI performance information of the first network device based on the AI model information of the first network device. Then, the terminal device may determine, based on the AI performance information of the first network device, whether to access the first network device. In other words, the AI performance information, of the first network device, that is determined by the terminal device based on the AI model information of the first network device may be used as a basis for determining the network device accessed by the terminal device. Therefore, in a scenario in which the network device provides an AI service for the terminal device, the AI performance information of the network device is used as a basis for determining whether to access the network device, so that the terminal device subsequently accesses a network device with excellent AI performance information, and obtains an excellent AI service.

Optionally, the AI service may include an AI model training service and/or an AI inference service.

It should be understood that, in any embodiment provided in this application, accessing the first network device (or a second network device) may be represented as camping on the first network device (or the second network device), or may be represented as handing over to the first network device (or the second network device), or may be represented as selecting the first network device (or the second network device), or may be represented as reselecting the first network device (or the second network device).

It should be understood that handover between different network devices (for example, the first network device and the second network device) in any embodiment of this application may include radio access network (radio access network, RAN) handover, packet data convergence protocol (packet data convergence protocol, PDCP) handover, radio link control (radio link control, RLC) protocol handover, radio resource control (radio resource control, RRC) layer handover, media access control (media access control, MAC) layer handover, physical (physical, PHY) layer handover, or other handover, for example, AI serving node handover. This is not limited herein.

Optionally, a network device that provides an AI service for a specific terminal device may be referred to as an AI serving node of the terminal device.

In a possible implementation of the first aspect, that the terminal device determines AI performance information of the first network device based on the AI model information of the first network device includes: The terminal device obtains first data, where the first data is local data of the terminal device or the first data is data generated based on a first signal from the first network device; and the terminal device determines the AI performance information of the first network device based on the AI model information of the first network device and the first data.

Based on the foregoing technical solution, in the case in which the terminal device determines the AI performance information of the first network device based on the AI model information of the first network device, the terminal device may determine the AI performance information of the first network device based on the AI model information of the first network device and the first data.

In an implementation, when the first data is the local data of the terminal device, implementation complexity of the terminal device may be reduced. In addition, in a scenario in which the terminal device needs to determine AI performance information of a plurality of network devices, storage overheads of the terminal device may also be reduced by reusing the local data of the terminal device.

Optionally, when the first data is the local data of the terminal device, the AI service provided by the first network device for the terminal device may include but is not limited to the AI inference service and/or the AI model training service. The local data may include location data of the terminal device, environmental data sensed by a sensor (for example, an image sensor, a distance sensor, or a speed measurement sensor) of the terminal device, and the like.

In another implementation, when the first data is the data generated based on the first signal from the first network device, because bases (which include the AI model information and AI model input data) for determining the AI performance information of the first network device by the terminal device are all from the first network device, the AI performance information, of the first network device, that is determined by the terminal device can more comprehensively reflect the AI performance information of the first network device.

Optionally, when the first data is the data generated based on the first signal from the first network device, the AI service provided by the first network device for the terminal device may include but is not limited to the AI inference service and/or the AI model training service. The data generated based on the first signal from the first network device may include a signal related to transmission of a radio signal, for example, channel data between the network device and the terminal device, and location data of the network device.

In a possible implementation of the first aspect, the method further includes: The terminal device obtains AI model information of a second network device; and the terminal device determines AI performance information of the second network device based on the AI model information of the second network device.

Based on the foregoing technical solution, in addition to the case in which the terminal device determines the AI performance information of the first network device, the terminal device may further determine AI performance information of another network device (where in this implementation, an example in which "the another network device" is the second network device is used for description). After the terminal device obtains the AI model information of the second network device, the terminal device determines the AI performance information of the second network device based on the AI model information of the second network device. Then, the terminal device may determine, based on the AI performance information of the second network device, whether to access the second network device. In other words, the AI performance information, of the second network device, that is determined by the terminal device based on the AI model information of the second network device may be used as a basis for determining the network device accessed by the terminal device.

In a possible implementation of the first aspect, that the terminal device obtains AI model information of a second network device includes: When a value of the AI performance information of the first network device is less than a first threshold, the terminal device obtains the AI model information of the second network device.

Based on the foregoing technical solution, in addition to the case in which the terminal device determines the AI performance information of the first network device, when the value of the AI performance information of the first network device is less than the first threshold, the terminal device may further send a request message to another network device, to obtain AI model information of the another network device (which includes the second network device). In addition, the terminal device determines AI performance information of the another network device based on the AI model information of the another network device, so that the terminal device subsequently accesses, based on AI performance information of a plurality of network devices, a network device with better AI performance information, and obtains a better AI service.

Optionally, when the value of the AI performance information of the first network device is equal to the first threshold, the terminal device determines the AI performance information of the second network device based on the AI model information of the second network device.

Optionally, the AI model information of the another network device may be carried in a unicast message, a multicast message, or a broadcast message. This is not limited herein.

In a possible implementation of the first aspect, that the terminal device determines AI performance information of the second network device based on the AI model information of the second network device includes: When the value of the AI performance information of the first network device is less than the first threshold, the terminal device determines the AI performance information of the second network device based on the AI model information of the second network device.

Based on the foregoing technical solution, in addition to the case in which the terminal device determines the AI performance information of the first network device, when the value of the AI performance information of the first network device is less than the first threshold, the terminal device may further determine AI performance information of another network device, so that the terminal device subsequently accesses, based on AI performance information of a plurality of network devices, a network device with better AI performance information, and obtains a better AI service.

Optionally, when the value of the AI performance information of the first network device is equal to the first threshold, the terminal device determines the AI performance information of the second network device based on the AI model information of the second network device.

In a possible implementation of the first aspect, that the terminal device determines AI performance information of the second network device based on the AI model information of the second network device includes: The terminal device obtains second data, where the second data is local data of the terminal device or the second data is data generated based on a second signal from the second network device; and the terminal device determines the AI performance information of the second network device based on the AI model information of the second network device and the second data.

Based on the foregoing technical solution, in the case in which the terminal device determines the AI performance information of the second network device based on the AI model information of the second network device, the terminal device may determine the AI performance information of the second network device based on the AI model information of the second network device and the second data.

In an implementation, when the second data is the local data of the terminal device, implementation complexity of the terminal device may be reduced. In addition, in a scenario in which the terminal device needs to determine AI performance information of a plurality of network devices, storage overheads of the terminal device may also be reduced by reusing the local data of the terminal device.

Optionally, when the second data is the local data of the terminal device, an AI service provided by the second network device for the terminal device may include but is not limited to an AI inference service and/or an AI model training service. The data generated based on the second signal from the second network device may include a signal related to transmission of a radio signal, for example, channel data between the network device and the terminal device, and location data of the network device.

In another implementation, when the second data is the data generated based on the second signal from the second network device, because bases (which include the AI model information and AI model input data) for determining the AI performance information of the second network device by the terminal device are all from the second network device, the AI performance information, of the second network device, that is determined by the terminal device can more comprehensively reflect the AI performance information of the second network device.

In a possible implementation of the first aspect, the first network device is a network device in which a serving cell of the terminal device is located; and the terminal device performs cell reselection when any one of the following items is met: a value of the AI performance information of the second network device is greater than the value of the AI performance information of the first network device; the value of the AI performance information of the first network device is less than the first threshold and a value of the AI performance information of the second network device is greater than a second threshold; or a value of the AI performance information of the second network device is greater than a second threshold.

Based on the foregoing technical solution, when the first network device is the network device in which the serving cell of the terminal device is located, the terminal device may further determine, based on the AI performance information of the first network device and/or the AI performance information of the second network device, whether to perform cell reselection, so that when the terminal device determines to perform cell reselection, the terminal device reselects a network device with better AI performance information, and obtains a better AI service.

It should be understood that, in the foregoing "any one" example, an example in which the value of the AI performance information is positively correlated with AI performance indicated by the AI performance information is used for description. To be specific, a larger value of the AI performance information indicates better AI performance indicated by the AI performance information (where for example, higher AI inference accuracy indicates a smaller loss of AI model training, and the like). On the contrary, a smaller value of the AI performance information indicates poorer AI performance indicated by the AI performance information (where for example, lower AI inference accuracy indicates a larger loss of AI model training, and the like).

Optionally, the value of the AI performance information may alternatively be negatively correlated with AI performance indicated by the AI performance information. To be specific, a smaller value of the AI performance information indicates better AI performance indicated by the AI performance information (where for example, higher AI inference accuracy indicates a smaller loss of AI model training, and the like). On the contrary, a larger value of the AI performance information indicates poorer AI performance indicated by the AI performance information (where for example, lower AI inference accuracy indicates a larger loss of AI model training, and the like). In this case, the implementation may be expressed as follows.

The terminal device performs cell reselection when any one of the following items is met: the value of the AI performance information of the second network device is less than the value of the AI performance information of the first network device; the value of the AI performance information of the first network device is greater than the first threshold and the value of the AI performance information of the second network device is less than the second threshold; or the value of the AI performance information of the second network device is less than the second threshold.

In a possible implementation of the first aspect, the method further includes: The terminal device sends first information to the first network device, where the first information includes at least one of the following items: the AI performance information of the first network device; the AI performance information of the second network device; or relative information between the AI performance information of the first network device and the AI performance information of the second network device.

Based on the foregoing technical solution, when the terminal device determines the AI performance information of the first network device and/or the AI performance information of the second network device, the terminal device may further send the information to the first network device. Therefore, the network device (which includes the first network device and/or the second network device) subsequently uses the information as one of bases for determining whether to hand over the network device accessed by the terminal device, so that the terminal device can access a network device with better AI performance information, and obtain a better AI service.

A second aspect of this application provides a communication method. The method is performed by a first network device, or the method is performed by some components (for example, a processor, a chip, or a chip system) in the first network device, or the method may be implemented by a logical module or software that can implement all or some functions of the first network device. In the second aspect and possible implementations of the second aspect, an example in which the communication method is performed by the first network device is used for description. In the method, the first network device generates AI model information of the first network device, where the AI model information of the first network device is used to determine AI performance information of the first network device; and the first network device sends the AI model information of the first network device.

Based on the foregoing technical solution, the network device generates and sends the AI model information of the first network device, so that after receiving the AI model information of the first network device, a terminal device may determine the AI performance information of the first network device based on the AI model information of the first network device. Then, the terminal device may determine, based on the AI performance information of the first network device, whether to access the first network device. In other words, the AI performance information, of the first network device, that is determined by the terminal device based on the AI model information of the first network device may be used as a basis for determining the network device accessed by the terminal device. Therefore, in a scenario in which the network device provides an AI service for the terminal device, the AI performance information of the network device is used as a basis for determining whether to access the network device, so that the terminal device subsequently accesses a network device with excellent AI performance information, and obtains an excellent AI service.

In a possible implementation of the second aspect, the method further includes: The first network device receives first information, where the first information includes at least one of the following items: the AI performance information of the first network device; AI performance information of a second network device; or relative information between the AI performance information of the first network device and AI performance information of a second network device.

Based on the foregoing technical solution, the first network device may further receive the AI performance information of the first network device and/or the AI performance information of the second network device. Therefore, the first network device subsequently uses the information as one of bases for determining whether to hand over the network device accessed by the terminal device, so that the terminal device can access a network device with better AI performance information, and obtain a better AI service.

In a possible implementation of the second aspect, the first network device sends a handover request message when any one of the following items is met: a value of the AI performance information of the second network device is greater than a value of the AI performance information of the first network device; a value of the AI performance information

of the first network device is less than a first threshold and a value of the AI performance information of the second network device is greater than a second threshold; or a value of the AI performance information of the second network device is greater than a second threshold.

Based on the foregoing technical solution, when the first network device is a network device in which a serving cell of the terminal device is located, the first network device may further determine, based on the AI performance information of the first network device and/or the AI performance information of the second network device, whether to hand over the network device accessed by the terminal device. The first network device may send the handover request message based on the information, to hand over the terminal device to another network device, so that the terminal device can access a network device with better AI performance information, and obtain a better AI service.

It should be understood that, in the foregoing "any one" example, an example in which the value of the AI performance information is positively correlated with AI performance indicated by the AI performance information is used for description. To be specific, a larger value of the AI performance information indicates better AI performance indicated by the AI performance information (where for example, higher AI inference accuracy indicates a smaller loss of AI model training, and the like). On the contrary, a smaller value of the AI performance information indicates poorer AI performance indicated by the AI performance information (where for example, lower AI inference accuracy indicates a larger loss of AI model training, and the like).

Optionally, the value of the AI performance information may alternatively be negatively correlated with AI performance indicated by the AI performance information. To be specific, a smaller value of the AI performance information indicates better AI performance indicated by the AI performance information (where for example, higher AI inference accuracy indicates a smaller loss of AI model training, and the like). On the contrary, a larger value of the AI performance information indicates poorer AI performance indicated by the AI performance information (where for example, lower AI inference accuracy indicates a larger loss of AI model training, and the like). In this case, the implementation may be expressed as follows.

The first network device sends a handover request message when any one of the following items is met includes: the value of the AI performance information of the second network device is less than the value of the AI performance information of the first network device; the value of the AI performance information of the first network device is greater than the first threshold and the value of the AI performance information of the second network device is less than the second threshold; or the value of the AI performance information of the second network device is less than the second threshold.

Optionally, that the first network device sends a handover request message includes: The first network device sends the handover request message to the terminal device, to indicate to hand over the terminal device to the second network device.

Optionally, that the first network device sends a handover request message includes: The first network device sends the handover request message to the second network device, to indicate to request to hand over the terminal device to the second network device.

In a possible implementation of the second aspect, the method further includes: The first network device sends a first signal, where the first signal is used to generate first data, and the first data is used to determine the AI performance information of the first network device.

Based on the foregoing technical solution, the first network device may further send the first signal used to generate the first data, so that the terminal device may determine the AI performance information of the first network device based on the AI model information of the first network device and the first data. Because bases (which include the AI model information and AI model input data) for determining the AI performance information of the first network device by the terminal device are all from the first network device, the AI performance information, of the first network device, that is determined by the terminal device can more comprehensively reflect the AI performance information of the first network device.

Optionally, when the first data is data generated based on the first signal from the first network device, the first data is applicable to a scenario in which the AI service provided by the first network device for the terminal device includes an AI model training service.

In a possible implementation of the first aspect or the second aspect, the AI model information includes parameter information of an AI model, for example, at least one of weight information or bias information.

In a possible implementation of the first aspect or the second aspect, the AI performance information includes at least one of the following items: inference accuracy information, data distribution information, label distribution information, model prediction distribution information, or data importance information.

In a possible implementation of the first aspect or the second aspect, the data importance information includes a weight change, a difference, a gradient, or the like for AI model training using the data.

In a possible implementation of the first aspect or the second aspect, the first data includes at least one of the following items: input data or label data.

A third aspect of this application provides a communication method. The method is performed by a terminal device, or the method is performed by some components (for example, a processor, a chip, or a chip system) in the terminal device, or the method may be implemented by a logical module or software that can implement all or some functions of the terminal device. In the third aspect and possible implementations of the third aspect, an example in which the communication method is performed by the terminal device is used for description. In the method, the terminal device determines data relative information between first data and second data, where the first data is data generated based on a first signal from a first network device, and the second data is data generated based on a second signal from a second network device; and the terminal device sends first indication information, where the first indication information indicates the data relative information.

Based on the foregoing technical solution, after the terminal device generates the first data based on the first signal from the first network device, and the terminal device generates the second data based on the second signal from the second network device, the terminal device determines the data relative information between the first data and the second data. Then, the terminal device sends first indication information for indicating the data relative information, so that after the first network device receives the first indication information, the first network device determines AI area information of the first network device and AI area information of the second network device based on the data relative information indicated by the first indication information. In a scenario in which the network device provides an AI service for the terminal device, the network device may determine the AI area information of the first network device and the AI area information of the second network device, and use the determined AI area information as a basis for handing over a network device accessed by the terminal device, so that the terminal device accesses a network device with excellent AI performance information, and obtains an excellent AI service.

Optionally, the first network device may further determine, based on the determined AI area information, whether the first network device and the second network device are located in a same AI area.

Optionally, network devices located in a same AI area have a same/similar AI model.

Optionally, network devices located in a same AI area can provide a same/similar AI service.

In addition, if the network device determines, based on the determined AI area information, that the first network device and the second network device are in a same AI area, when the terminal device is handed over between the first network device and the second network device, overheads caused by downloading (or re-downloading) unnecessary AI model information may be reduced, and the terminal device may obtain a same/similar AI service in a handover process.

A fourth aspect of this application provides a communication method. The method is performed by a first network device, or the method is performed by some components (for example, a processor, a chip, or a chip system) in the first network device, or the method may be implemented by a logical module or software that can implement all or some functions of the first network device. In the fourth aspect and possible implementations of the fourth aspect, an example in which the communication method is performed by the first network device is used for description. In the method, the first network device receives first indication information from a terminal device, where the first indication information indicates data relative information between first data and second data, the first data is data generated based on a first signal from the first network device, and the second data is data generated based on a second signal from a second network device; and the first network device determines AI area information of the first network device and AI area information of the second network device based on the data relative information indicated by the first indication information.

Based on the foregoing technical solution, after the first network device receives the first indication information for indicating the data relative information, the first network device may determine the AI area information of the first network device and the AI area information of the second network device based on the data relative information. In a scenario in which the network device provides an AI service for the terminal device, the first network device may determine the AI area information of the first network device and the AI area information of the second network device, and use the determined AI area information as a basis for handing over a network device accessed by the terminal device, so that the terminal device accesses a network device with excellent AI performance information, and obtains an excellent AI service.

Optionally, after that the first network device determines the AI area information of the first network device and the AI area information of the second network device based on the data relative information, the method further includes:

The first network device determines, based on the determined AI area information, whether the first network device and the second network device are located in a same AI area.

Optionally, network devices located in a same AI area have a same/similar AI model.

Optionally, network devices located in a same AI area can provide a same/similar AI service.

In addition, if the network device determines, based on the determined AI area information, that the first network device and the second network device are in a same AI area, when the terminal device is handed over between the first network device and the second network device, overheads caused by downloading (or re-downloading) unnecessary AI model information may be reduced, and the terminal device may obtain a same/similar AI service in a handover process.

In a possible implementation of the fourth aspect, that the first network device determines the AI area information of the first network device and the AI area information of the second network device based on the data relative information includes: The first network device locally configures the AI area information of the first network device and the AI area information of the second network device based on the data relative information.

Based on the foregoing technical solution, after the first network device receives the first indication information, the first network device may locally configure the AI area information of the first network device and the AI area information of the second network device based on the data relative information indicated by the first indication information. In this way, the determining process is locally performed by the first network device, and no other device is required to assist in decision-making, thereby reducing overheads.

In a possible implementation of the fourth aspect, that the first network device determines the AI area information of the first network device and the AI area information of the second network device based on the data relative information includes: The first network device sends the data relative information to another network device (for example, a core network device); and the first network device receives second indication information sent by the another network device, where the second indication information indicates the AI area information of the first network device and the AI area information of the second network device.

Based on the foregoing technical solution, after the first network device receives the first indication information, the first network device may send the data relative information to another network device, so that the another network device assists in decision-making, to determine the AI area information of the first network device and the AI area information of the second network device. In this way, the determining process is performed by the another network device, so that computing power consumption of the first network device is reduced. In addition, in a scenario in which there are a large quantity of terminal devices, a plurality of network devices (which include the first network device, the second network device, and the like) may aggregate, to the another network device, first indication information reported by the plurality of terminal devices, to perform macro-control on AI services of the plurality of terminal devices in the another network device.

In a possible implementation of the third aspect or the fourth aspect, the data relative information includes a data distribution distance or a data similarity.

In a possible implementation of the third aspect or the fourth aspect, the first network device is a network device in which a serving cell of the terminal device is located.

A fifth aspect of this application provides a communication apparatus. The apparatus may implement the method according to any one of the first aspect or the possible implementations of the first aspect. The apparatus includes a corresponding unit or module for performing the foregoing method. The unit or module included in the apparatus may be implemented by software and/or hardware. For example, the apparatus may be a terminal device, or the apparatus may be a component (for example, a processor, a chip, or a chip system) in the terminal device, or the apparatus may be a logical module or software that can implement all or some functions of the terminal device.

The apparatus includes a transceiver unit and a processing unit. The transceiver unit is configured to obtain AI model information of a first network device. The processing unit is configured to determine AI performance information of the first network device based on the AI model information of the first network device.

In a possible implementation of the fifth aspect, the processing unit is specifically configured to: obtain first data, where the first data is local data of the terminal device or the first data is data generated based on a first signal from the first network device; and determine the AI performance information of the first network device based on the AI model information of the first network device and the first data.

In a possible implementation of the fifth aspect, the transceiver unit is further configured to obtain AI model information of a second network device. The processing unit is further configured to determine AI performance information of the second network device based on the AI model information of the second network device.

In a possible implementation of the fifth aspect, the processing unit is specifically configured to: when determining that a value of the AI performance information of the first network device is less than a first threshold, determine the AI performance information of the second network device based on the AI model information of the second network device.

In a possible implementation of the fifth aspect, the processing unit is specifically configured to: when determining that the value of the AI performance information of the first network device is less than the first threshold, obtain the AI model information of the second network device.

In a possible implementation of the fifth aspect, the processing unit is specifically configured to: obtain second data, where the second data is local data of the terminal device or the second data is data generated based on a second signal from the second network device; and determine the AI performance information of the second network device based on the AI model information of the second network device and the second data.

In a possible implementation of the fifth aspect, the first network device is a network device in which a serving cell of the communication apparatus is located; and the processing unit is further configured to perform cell reselection when any one of the following items is met: a value of the AI performance information of the second network device is greater than the value of the AI performance information of the first network device; the value of the AI performance information of the first network device is less than the first threshold and a value of the AI performance information of the second network device is greater than a second threshold; or a value of the AI performance information of the second network device is greater than a second threshold.

In a possible implementation of the fifth aspect, the transceiver unit is further configured to send first information to the first network device, where the first information includes at least one of the following items: the AI performance information of the first network device; the AI performance information of the second network device; or relative information between the AI performance information of the first network device and the AI performance information of the second network device.

It should be noted that, for an implementation process of the communication apparatus provided in the fifth aspect of this application, refer to the implementation process described in the first aspect, and corresponding technical effect is implemented. Details are not described herein.

A sixth aspect of this application provides a communication apparatus. The apparatus may implement the method according to any one of the second aspect or the possible implementations of the second aspect. The apparatus includes a corresponding unit or module for performing the foregoing method. The unit or module included in the apparatus may be implemented by software and/or hardware. For example, the apparatus may be a first network device, or the apparatus may be a component (for example, a processor, a chip, or a chip system) in the first network device, or the apparatus may be a logical module or software that can implement all or some functions of the first network device.

The apparatus includes a transceiver unit and a processing unit. The processing unit is configured to determine AI model information of the first network device, where the AI model information of the first network device is used to determine AI performance information of the first network device. The transceiver unit is configured to send the AI model information of the first network device.

In a possible implementation of the sixth aspect, the transceiver unit is further configured to receive first information, where the first information includes at least one of the following items: the AI performance information of the first network device; AI performance information of a second network device; or relative information between the AI performance information of the first network device and AI performance information of a second network device.

In a possible implementation of the sixth aspect, that the transceiver unit is further configured to send a handover request message when any one of the following items is met includes: a value of the AI performance information of the second network device is greater than a value of the AI performance information of the first network device; a value of the AI performance information of the first network device is less than a first threshold and a value of the AI performance information of the second network device is greater than a second threshold; or a value of the AI performance information of the second network device is greater than a second threshold.

In a possible implementation of the sixth aspect, the transceiver unit is further configured to send a first signal, where the first signal is used to generate first data, and the first data is used to determine the AI performance information of the first network device.

In a possible implementation of the fifth aspect or the sixth aspect, the AI model information includes parameter information of an AI model, for example, at least one of weight information or bias information.

In a possible implementation of the fifth aspect or the sixth aspect, the AI performance information includes at least one of the following items:

inference accuracy information, data distribution information, label distribution information, model prediction distribution information, or data importance information.

In a possible implementation of the fifth aspect or the sixth aspect, the data importance information includes a weight change, a difference, a gradient, or the like for AI model training using the data.

In a possible implementation of the fifth aspect or the sixth aspect, the first data includes at least one of the following items: input data or label data.

It should be noted that, for an implementation process of the communication apparatus provided in the sixth aspect of this application, refer to the implementation process described in the second aspect, and corresponding technical effect is implemented. Details are not described herein.

A seventh aspect of this application provides a communication apparatus. The apparatus may implement the method according to any one of the third aspect or the possible implementations of the third aspect. The apparatus includes a corresponding unit or module for performing the foregoing method. The unit or module included in the apparatus may be implemented by software and/or hardware. For example, the apparatus may be a terminal device, or the apparatus may be a component (for example, a processor, a chip, or a chip system) in the terminal device, or the apparatus may be a logical module or software that can implement all or some functions of the terminal device.

The apparatus includes a transceiver unit and a processing unit. The processing unit is configured to determine data relative information between first data and second data, where the first data is data generated based on a first signal from a first network device, and the second data is data generated based on a second signal from a second network device. The transceiver unit is configured to send first indication information, where the first indication information indicates the data relative information.

It should be noted that, for an implementation process of the communication apparatus provided in the seventh aspect of this application, refer to the implementation process described in the third aspect, and corresponding technical effect is implemented. Details are not described herein.

An eighth aspect of this application provides a communication apparatus. The apparatus may implement the method according to any one of the fourth aspect or the possible implementations of the fourth aspect. The apparatus includes a corresponding unit or module for performing the foregoing method. The unit or module included in the apparatus may be implemented by software and/or hardware. For example, the apparatus may be a first network device, or the apparatus may be a component (for example, a processor, a chip, or a chip system) in the first network device, or the apparatus may be a logical module or software that can implement all or some functions of the first network device.

The apparatus includes a transceiver unit and a processing unit. The transceiver unit is configured to receive first indication information from a terminal device, where the first indication information indicates data relative information between first data and second data, the first data is data generated based on a first signal from the first network device, and the second data is data generated based on a second signal from a second network device. The processing unit is configured to determine AI area information of the first network device and AI area information of the second network device based on the data relative information.

Optionally, the processing unit is further configured to determine, based on the AI area information, whether the first network device and the second network device are located in a same AI area.

In a possible implementation of the seventh aspect or the eighth aspect, the data relative information includes a data distribution distance or a data similarity.

In a possible implementation of the seventh aspect or the eighth aspect, the first network device is a network device in which a serving cell of the communication apparatus is located.

It should be noted that, for an implementation process of the communication apparatus provided in the eighth aspect of this application, refer to the implementation process described in the fourth aspect, and corresponding technical effect is implemented. Details are not described herein.

A ninth aspect of embodiments of this application provides a communication apparatus. The apparatus includes at least one processor. The at least one processor is coupled to a memory. The memory is configured to store a program or instructions. The at least one processor is configured to execute the program or the instructions, so that the apparatus implements the method according to any one of the first aspect or the possible implementations of the first aspect, or the apparatus implements the method according to any one of the second aspect or the possible implementations of the second aspect, or the apparatus implements the method according to any one of the third aspect or the possible implementations of the third aspect, or the apparatus implements the method according to any one of the fourth aspect or the possible implementations of the fourth aspect.

In a possible implementation, the communication apparatus further includes the memory. Optionally, the memory and the processor are integrated, or the memory and the processor are separately disposed.

In a possible implementation, the communication apparatus further includes a transceiver, configured to receive and send data or signaling.

A tenth aspect of embodiments of this application provides a computer-readable storage medium storing one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect, or the processor performs the method according to any one of the fourth aspect or the possible implementations of the fourth aspect.

An eleventh aspect of embodiments of this application provides a computer program product (or referred to as a computer program) storing one or more computers. When the computer program product is executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect, or the processor performs the method according to any one of the fourth aspect or the possible implementations of the fourth aspect.

A twelfth aspect of embodiments of this application provides a chip system. The chip system includes at least one processor, configured to support a communication apparatus in implementing the function according to any one of the first aspect or the possible implementations of the first aspect, or configured to support a communication apparatus in implementing the function according to any one of the second aspect or the possible implementations of the second aspect, or configured to support a communication apparatus in implementing the function according to any one of the third aspect or the possible implementations of the third aspect, or configured to support a communication apparatus in implementing the function according to any one of the fourth aspect or the possible implementations of the fourth aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A thirteenth aspect of embodiments of this application provides a communication system. The communication system includes the communication apparatuses according to the fifth aspect and the sixth aspect, and/or the communication system includes the communication apparatuses according to the seventh aspect and the eighth aspect, and/or the communication system includes the communication apparatus according to the ninth aspect.

For technical effect brought by any design manner in the fifth aspect to the twelfth aspect, refer to the technical effect brought by different implementations in the first aspect to the fourth aspect. Details are not described herein again.

## BRIEF DESCRIPTION OF DRAWINGS

FIG. 1 is a diagram of a communication system according to this application;
FIG. 2a is a diagram of an AI processing process in a communication method according to this application;
FIG. 2b is a diagram of an AI processing process in a communication method according to this application;
FIG. 2c is a diagram of an AI processing process in a communication method according to this application;
FIG. 3a is a diagram of a neural network in an AI processing process;
FIG. 3b is a diagram of an association relationship between a loss function and a neural network parameter in an AI processing process;
FIG. 3c is a diagram of gradient information processing in an AI processing process;
FIG. 4 is an interaction diagram of a communication method according to this application;
FIG. 5 is another interaction diagram of a communication method according to this application;
FIG. 6a is a diagram of area division in a communication method according to this application;
FIG. 6b is a diagram of a handover scenario of a communication method according to this application;
FIG. 7 is another interaction diagram of a communication method according to this application;
FIG. 8 is another interaction diagram of a communication method according to this application;
FIG. 9 is a diagram of a communication apparatus according to this application;
FIG. 10 is another diagram of a communication apparatus according to this application;
FIG. 11 is another diagram of a communication apparatus according to this application; and
FIG. 12 is another diagram of a communication apparatus according to this application.

## DESCRIPTION OF EMBODIMENTS

The following describes technical solutions in embodiments of this application with reference to accompanying drawings in embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.

(1) Terminal device: may be a wireless terminal device that can receive scheduling and indication information of a network device. The wireless terminal device may be a device that provides voice and/or data connectivity for a user, a handheld device having a wireless connection function, or another processing device connected to a wireless modem.

The terminal device may communicate with one or more core networks or an internet through a RAN. The terminal device may be a mobile terminal device, for example, a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

By way of an example and not a limitation, in embodiments of this application, the terminal device may alternatively be a wearable device. The wearable device may also be referred to as a wearable intelligent device, an intelligent wearable device, or the like, and is a general term for wearable devices that are intelligently designed and developed for daily wear, for example, glasses, gloves, watches, clothes, and shoes, by using a wearable technology. The wearable device is a portable device that is directly worn on a body or integrated into clothes or accessories of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that focus only on a specific type of application function and need to be used together with other devices such as smartphones, for example, various smart bands, smart helmets, or smart jewelry for monitoring physical signs.

Alternatively, the terminal may be an uncrewed aerial vehicle, a robot, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may alternatively be a terminal device in an evolved communication system (for example, a 6th generation (6th generation, 6G) communication system) after a 5th generation (5th generation, 5G) communication system, a terminal device in a future evolved public land mobile network (public land mobile network, PLMN), or the like. For example, a 6G network may further extend a form and a function of a 5G communication terminal. A 6G terminal includes but is not limited to a vehicle, a cellular network terminal (integrated with a function of a satellite terminal), an uncrewed aerial vehicle, and an internet of things (internet of things, IoT) device.

In embodiments of this application, the terminal device may further obtain an AI service provided by a network device. Optionally, the terminal device may further have an AI processing capability.

(2) Network device: may be a device in a wireless network. For example, the network device may be a RAN node (or device) that connects the terminal device to the wireless network, and may also be referred to as a base station. Currently, for example, the RAN device is a base station gNB (gNodeB), a transmission reception point (transmission reception point, TRP), an evolved NodeB (evolved NodeB, eNB), a NodeB (NodeB, NB), a home base station (for example, a home evolved NodeB, or a home NodeB, HNB), a baseband unit (baseband unit, BBU), or a wireless fidelity (wireless fidelity, Wi-Fi) access point AP in a 5G communication system. In addition, in a network structure, the network device may include a central unit (central unit, CU) node, a distributed unit (distributed unit, DU) node, or a RAN device including a CU node and a DU node.

The network device may be another apparatus that provides a wireless communication function for the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), or a public data network gateway (public data network gateway, PDN gateway, P-GW) in a 4th generation (4th generation, 4G) network; and an access and mobility management function (access and mobility management function, AMF), a user plane function (user plane function, UPF), or a session management function (session management function, SMF) in a 5G network. In addition, the core network device may further include a 5G network and another core network device in a next generation network of the 5G network.

In embodiments of this application, the network device may further be a network node having an AI capability, and may provide an AI service for a terminal or another network device, for example, may be an AI node on a network side (an access network or a core network), a computing power node, a RAN node having an AI capability, or a core network element having an AI capability.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

(3) Configuration and preconfiguration: In this application, both the configuration and the preconfiguration are used. The configuration means that the network device/server sends configuration information of some parameters or parameter values to the terminal by using a message or signaling, so that the terminal determines a communication parameter or a transmission resource based on the values or the information. Similar to the configuration, the preconfiguration may be parameter information or a parameter value that is negotiated by the network device/server and the terminal device in advance, or may be parameter information or a parameter value that is used by the base station/network device or the terminal device and that is specified in a standard protocol, or may be parameter information or a parameter value that is prestored in the base station/server or the terminal device. This is not limited in this application.

Further, these values and parameters may be changed or updated.

(4) "A plurality of in embodiments of this application means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

In this application, unless otherwise specified, for same or similar parts in embodiments, refer to each other. In embodiments of this application and the methods/designs/implementations in embodiments, unless otherwise specified or a logical conflict occurs, terms and/or descriptions between different embodiments and between the methods/designs/implementations in embodiments are consistent and may be mutually referenced. Technical features in different embodiments and the methods/designs/implementations in embodiments may be combined to form a new embodiment, method, or implementation based on an internal logical relationship thereof. The following implementations of this application are not intended to limit the protection scope of this application.

This application may be applied to a long term evolution (long term evolution, LTE) system, a new radio (new radio, NR) system, or a communication system evolved after 5G (for example, 6G). The communication system includes a network device and a terminal device.

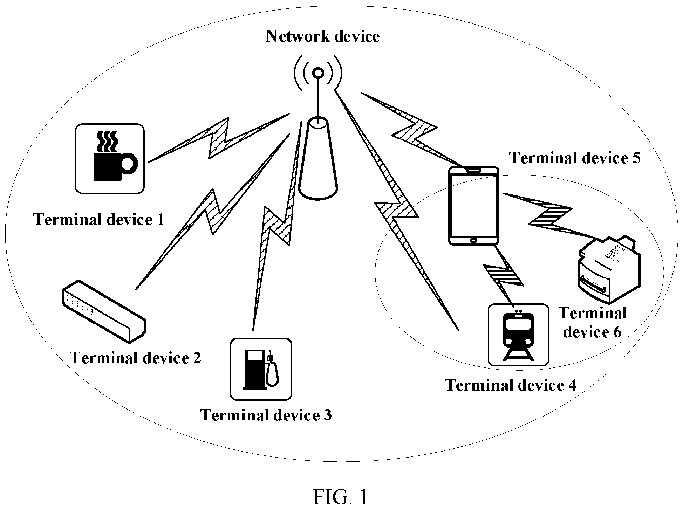

FIG. 1 is a diagram of a communication system according to this application. FIG. 1 shows an example of a network device 101 and six terminal devices. The six terminal devices are respectively a terminal device 1, a terminal device 2, a terminal device 3, a terminal device 4, a terminal device 5, a terminal device 6, and the like. In the example shown in FIG. 1, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1, an AI configuration information sending entity may be a network device. An AI configuration information receiving entity may be the terminal device 1 to the terminal device 6. In this case, the network device and the terminal device 1 to the terminal device 6 form a communication system. In the communication system, the terminal device 1 to the terminal device 6 may send uplink data to the network device, and the network device needs to receive the uplink data sent by the terminal device 1 to the terminal device 6. In addition, the network device may send configuration information to the terminal device 1 to the terminal device 6.

Optionally, the AI configuration information may be understood as downlink information, and includes AI model information and/or a signal used to generate AI data that are/is mentioned below. The uplink data may include AI performance information and/or indication information for indicating data relative information of the AI data that are/is mentioned below.

For example, in FIG. 1, UE 4 to UE 6 may also form a communication system. The terminal device 5 is used as a network device, namely, the AI configuration information sending entity. The terminal device 4 and the terminal device 6 are used as terminal devices, namely, AI configuration information receiving entities. For example, in an internet of vehicles system, the terminal device 5 separately sends AI configuration information to the terminal device 4 and the terminal device 6, and receives uplink data sent by the terminal device 4 and the terminal device 6. Correspondingly, the terminal device 4 and the terminal device 6 receive the AI configuration information sent by the terminal device 5, and send the uplink data to the terminal device 5.

The wireless communication system shown in FIG. 1 is used as an example. The wireless communication system generally includes the network device and the terminal device. Generally, the terminal device may access (or camp on) the network device, and receive scheduling and indication information from the network device, to implement wireless communication.

Currently, the terminal device may perform handover, with reference to some mechanisms (for example, cell selection, cell reselection, or cell switching), between network device accessed by the terminal device. To be specific, the terminal device may use, at different moments based on the mechanisms, different network devices in a plurality of network devices as network devices accessed by the terminal device. A basis for determining a serving network device in the plurality of network devices mainly includes channel quality information for communication between the terminal device and the network device. For example, the signal quality information may include RSRP, RSRQ, an SINR, or the like.

It should be understood that, in any embodiment provided in this application, accessing a specific network device may be represented as camping on the network device, or may be represented as handing over to the network device, or may be represented as selecting the network device, or may be represented as reselecting the network device.

Optionally, in a current communication system, the terminal device may receive a signal, from one or more cells (which include a serving cell, a neighboring cell, and the like), that is used for measurement. A measurement result obtained by the terminal device through measurement based on the signal may be used as a basis for handing over a network device accessed by the terminal device, so that the network device performs cell switching on the terminal device (or enables the terminal device to perform cell reselection).

For example, when the terminal device determines that a measurement result corresponding to a signal of a serving cell is greater than a specific threshold, the terminal device may determine that a signal of a neighboring cell does not need to be measured. For another example, when the terminal device determines that a measurement result corresponding to a signal of a serving cell is less than a specific threshold, the terminal device may determine to start to measure a signal of a neighboring cell. For another example, when the terminal device determines that a measurement result corresponding to a signal of a serving cell is less than a specific threshold and that a measurement result corresponding to a signal of a neighboring cell is greater than another threshold, the terminal device may determine to start to hand over to the neighboring cell. For another example, when the terminal device determines that a measurement result corresponding to a signal of a neighboring cell is greater than another threshold, the terminal device may determine to start to hand over to the neighboring cell. For another example, when the terminal device determines that a measurement result corresponding to a signal of a serving cell is less than a specific threshold, the terminal device may determine to start to hand over to a neighboring cell.

In addition to providing a communication service for the terminal device, the network device may further provide an AI service for the terminal device, and different network devices may provide different AI services. In recent years, an AI technology represented by a deep neural network (deep neural network, DNN) has made significant progress in fields such as machine vision and natural language processing, and gradually become popular in actual life. It is foreseeable that AI is ubiquitous in various connected devices (for example, terminals and edges).

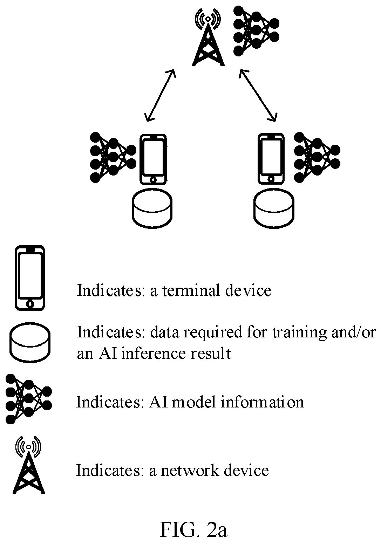

In some possible implementations, the communication system may become a platform for large-scale machine learning and AI services. The terminal device may enjoy an AI inference service or an AI model training service from a network, or may participate in data collection required for network model training, or even participate in distributed model training. As shown in FIG. 2a, the network device and the terminal device may exchange some data. To provide an AI service, the exchanged data may include "data required for training", "an AI inference result", and/or "AI model information".

For example, the data required for training may include input data and/or a label. The AI model information may include parameter information of an AI model, for example, weight information of a connection between neural network nodes and bias information of the neural network node. The AI inference result may include output data and/or a label. Optionally, the input data may include inference data distribution information, and the output data may include label distribution information, model prediction distribution information, or the like.

In a possible implementation, an implementation process of the AI inference service may include: The terminal device uploads local AI model information to the network device, and the network device provides a neural network inference computing service, and feeds back the AI inference result to the terminal device.

In a possible implementation, an implementation process of the AI inference service may include: The network device provides trained AI model information, and the terminal device downloads the AI model information from the network device for local inference, to obtain the AI inference result.

In a possible implementation, an implementation process of the AI inference service may include: The network device provides trained AI model information, and the terminal device downloads the AI model information from the network device, for the terminal device and the network device to perform joint inference, to obtain the AI inference result. Optionally, because both the network device and the terminal device participate in the AI inference process, this implementation may also be referred to as joint inference.

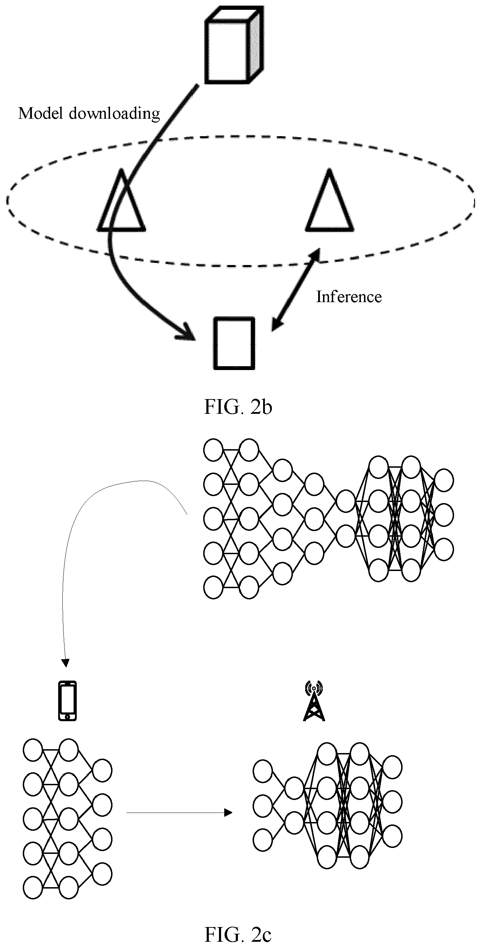

For example, the implementation process may be implemented in a manner shown in FIG. 2b. In FIG. 2b, an example in which the terminal device is a rectangle, the network device is a cuboid, and data exchanged between the terminal device and the network device is a triangle is used for description. As shown in FIG. 2b, the terminal device performs model downloading, that is, the terminal device downloads the AI model from the network device, for joint inference performed by the terminal device and the network device.

For another example, the implementation process may be implemented in a manner shown in FIG. 2c. In FIG. 2c, the network device obtains a complete AI model through training. The AI model is divided into two parts. One part is deployed locally on the network device, and the other part is sent to the terminal device, so that the terminal device and the network device perform joint inference, to provide an AI service of joint inference.

In a possible implementation, an implementation process of the AI model training service may include: The terminal device participates in federated learning training by using locally generated data required for training, and uploads a model obtained through training (namely, an intermediate result of AI model information, or referred to as AI model information before integration) to the network device for integration, so that the network device obtains integrated AI model information. Further, optionally, the terminal device may download the integrated AI model information from the network. Optionally, because both the network device and the terminal device participate in the AI training process, the implementation may also be referred to as joint training.

In a possible implementation, an implementation process of the AI model training service may include: The terminal device is responsible for collecting data required for training, and uploading the collected data required for training to the network device, so that the network device performs model training based on the data required for training, and the network device obtains the integrated AI model information. Further, optionally, the terminal device may download the integrated AI model information from the network.

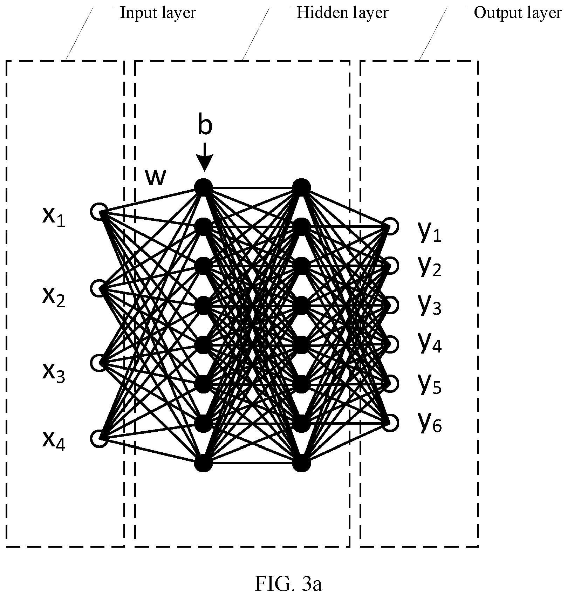

For ease of understanding, the following uses a fully connected neural network as an example, to describe the neural network and a training method of the neural network. The fully connected neural network is also referred to as a multilayer perceptron (multilayer perceptron, MLP). As shown in FIG. 3a, one MLP includes one input layer (left side), one output layer (right side), and a plurality of hidden layers (middle).

Optionally, the "data required for training" in FIG. 2a may be considered as data corresponding to the input layer in FIG. 3a, the "AI model information" in FIG. 2a may be considered as data corresponding to the hidden layer in FIG. 3a, and the "AI inference result" in FIG. 2a may be considered as data corresponding to the output layer in FIG. 3a.

Optionally, the data corresponding to the input layer in FIG. 3a may be referred to as input data, and the input data may include data required for inference and/or the "data required for training" in FIG. 2a.

In addition, each layer of the MLP includes several nodes, which are referred to as neurons. Neurons of two adjacent layers are connected to each other.

Optionally, in consideration of neurons at two adjacent layers, an output $h$ of a neuron at a lower layer is a weighted sum of all neurons $x$ at an upper layer that are connected to the neuron at the lower layer and passes through an activation function, and may be expressed as:

$$h = f(wx + b),$$

where

$w$ is a weight matrix, $b$ is a bias vector, and $f$ is an activation function.

Further, optionally, an output of the neural network may be recursively expressed as:

$$y = f_n(w_n f_{n-1}(\ldots) + b_n).$$

In other words, the neural network may be understood as a mapping relationship from an input data set to an output data set. Usually, the neural network is initialized randomly. A process of obtaining the mapping relationship from random $w$ and $b$ by using existing data is referred to as training of the neural network.

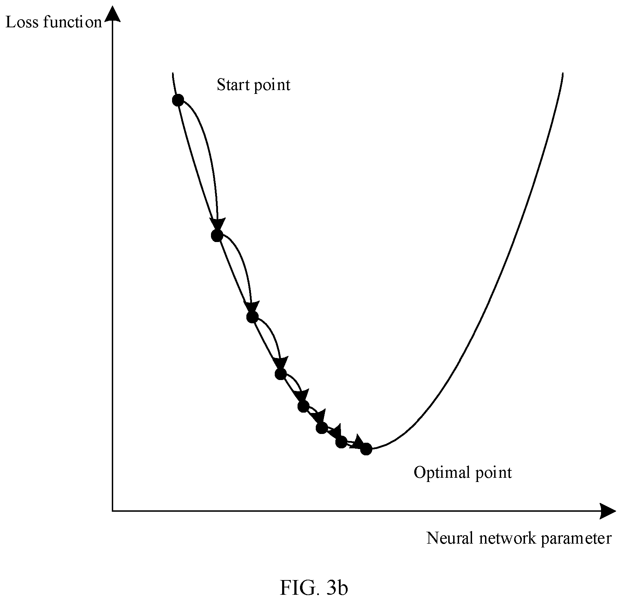

Optionally, a specific training manner is to evaluate an output result of the neural network by using a loss function (loss function). As shown in FIG. 3b, an error may be back-propagated, so that a neural network parameter (including $w$ and $b$) can be iteratively optimized by using a gradient descent method until the loss function reaches a minimum value, namely, an "optimal point" in FIG. 3b. It may be understood that the neural network parameter corresponding to the "optimal point" in FIG. 3b may be used as a neural network parameter in the trained AI model information.

Further, optionally, the gradient descent process may be expressed as:

$$\theta \leftarrow \theta - \eta \frac{\partial L}{\partial \theta},$$

where

0 is a to-be-optimized parameter (including $w$ and $b$), L is a loss function, and $\eta$ is a learning rate, and controls a gradient descent step.

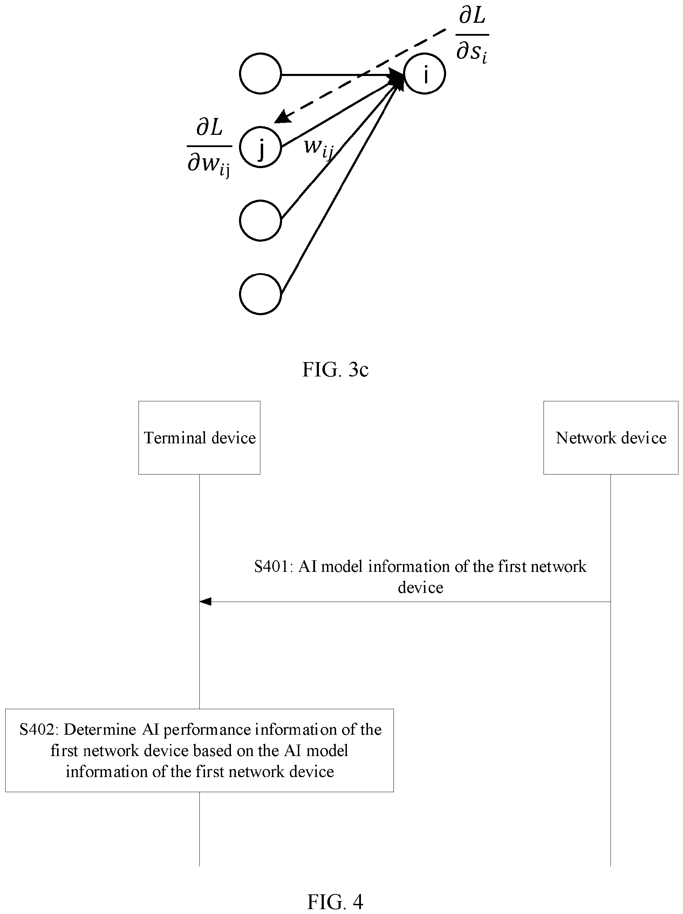

Further, optionally, in the back propagation process, a chain rule for obtaining a partial derivative is used. As shown in FIG. 3c, a gradient of a parameter at a previous layer may be obtained by recursive computing of a gradient of a parameter at a next layer, and may be expressed as:

$$\frac{\partial L}{\partial w_{ij}} = \frac{\partial L}{\partial s_i} \frac{\partial s_i}{\partial w_{ij}},$$

where

$w_{ij}$ is a weight of connecting a node j to a node i, and $s_i$ is an input weighted sum on the node i.

It may be learned from the foregoing content that the network device may provide an AI service for the terminal device. For example, the terminal device may download trained AI model information from the network device, or participate in AI model training of a network device corresponding to a cell in which the terminal device is located. Generally, the AI model information downloaded by the terminal device is usually obtained through training by the network device, and participating in training is usually performed on the network device corresponding to the cell in which the terminal device is located.

Further, in a current network, a basis for determining a serving network device from a plurality of network devices by the terminal device mainly includes channel quality information for communication between the terminal device and the network device. However, different network devices may provide different AI services, and channel quality for communication between the terminal device and the network device does not completely represent quality of the AI service provided by the network device. For example, cell switching (or cell reselection, cell selection, or the like) for which only channel quality of communication is considered may enable the terminal device to access a specific network device with good channel quality. However, an AI service provided by the network device may not meet an AI inference requirement and/or an AI model training requirement of the terminal device. Consequently, the AI service obtained by the terminal device is poor.

Therefore, in a scenario in which the network device provides the AI service for the terminal device, how to determine the network device accessed by the terminal device is an urgent technical problem to be resolved.

To resolve the foregoing problem, this application provides a communication method and a communication apparatus. Therefore, in a scenario in which a network device provides an AI service for a terminal device, AI performance information of the network device is used as a basis for determining whether to access the network device, so that the terminal device subsequently accesses a network device with excellent AI performance information, and obtains an excellent AI service. The following provides further descriptions with reference to the accompanying drawings.

FIG. 4 is a diagram of a communication method according to this application. The method includes the following steps.

S401: A terminal device obtains AI model information of a first network device.

In this embodiment, in step S401, the first network device sends the AI model information of the first network device. Correspondingly, the terminal device receives the AI model information of the first network device.

In a possible implementation, the AI model information includes parameter information of an AI model, for example, at least one of weight information or bias information.

For example, the weight information, the bias information, or the like may be a bit, a data packet, or the like obtained after quantization and encoding are performed on a weight value, a bias value, or the like.

In a possible implementation, AI performance information includes at least one of the following items: inference accuracy information, data distribution information, label distribution information, model prediction distribution information, or data importance information.

For example, the AI performance information may be a bit obtained after quantization and encoding are performed on a value corresponding to (the inference accuracy information, the data distribution information, the label distribution information, the model prediction distribution information, or the data importance information). The inference accuracy information may indicate accuracy of neural network inference, namely, an error or a distance of a neural network output relative to a real label. The data distribution information, the label distribution information, and the model prediction distribution information are separately distribution information such as input data, a label, and a probability density function output by model prediction. The data importance information is a weight difference or a gradient value before or after model training.

Optionally, in some implementations of the AI performance information, the data importance information includes a weight change, a difference, a gradient, or the like for AI model training using the data.

For example, a larger gradient or weight change obtained after the AI model is trained by using the data indicates that these pieces of data are more important. On the contrary, a smaller gradient or weight change obtained after the AI model is trained by using the data indicates that these pieces of data are less important.

S402: The terminal device determines the AI performance information of the first network device based on the AI model information of the first network device.

In this embodiment, after the terminal device obtains the AI model information of the first network device in step S401, the terminal device determines the AI performance information of the first network device based on the AI model information of the first network device in step S402.

In a possible implementation, the terminal device obtains first data, where the first data is local data of the terminal device or the first data is data generated based on a first signal from the first network device; and the terminal device determines the AI performance information of the first network device based on the AI model information of the first network device and the first data.

Optionally, the first data includes at least one of the following items: input data or label data.

For example, the input data and the label data may be used to evaluate inference performance or training performance of a neural network. For example, that the input data is used to evaluate the inference performance of the neural network may include: inputting the input data into the neural network, and calculating a difference between a neural network output and a label, to obtain the inference performance of the neural network; and that the label data is used to evaluate the training performance of the neural network may include: inputting the input data into the neural network, calculating a difference between a neural network output and a label, and updating a parameter of the neural network based on the difference as a loss function, where a value of the difference before or after parameter updating may be used to represent importance of data (for neural network training).

In an implementation, when the first data used by the terminal device in step S402 is the local data of the terminal device, implementation complexity of the terminal device may be reduced. In addition, in a scenario in which the terminal device needs to determine AI performance information of a plurality of network devices, storage overheads of the terminal device may also be reduced by reusing the local data of the terminal device.

Optionally, when the first data is the local data of the terminal device, an AI service provided by the first network device for the terminal device may include but is not limited to an AI inference service and/or an AI model training service. The local data may include location data of the terminal device, environmental data sensed by a sensor (for example, an image sensor, a distance sensor, or a speed measurement sensor) of the terminal device, and the like.

In another implementation, when the first data used by the terminal device in step S402 is the data generated based on the first signal from the first network device, because bases (which include the AI model information and AI model input data) for determining the AI performance information of the first network device by the terminal device are all from the first network device, the AI performance information, of the first network device, that is determined by the terminal device can more comprehensively reflect the AI performance information of the first network device.

Optionally, when the first data is the data generated based on the first signal from the first network device, an AI service provided by the first network device for the terminal device may include but is not limited to an AI inference service and/or an AI model training service. The data generated based on the first signal from the first network device may include a signal related to transmission of a radio signal, for example, channel data between the network device and the terminal device, and location data of the network device.

In a possible implementation, after determining the AI performance information of the first network device in step S402, the terminal device further sends the AI performance information of the first network device to the first network device. Therefore, the network device (which includes the first network device) subsequently uses the information as one of bases for determining whether to hand over the network device accessed by the terminal device, so that the terminal device can access a network device with better AI performance information, and obtain a better AI service.

Based on the technical solution shown in FIG. 4, after the terminal device obtains the AI model information of the first network device in step S401, the terminal device determines the AI performance information of the first network device based on the AI model information of the first network device in step S402. Then, the terminal device may determine, based on the AI performance information of the first network device, whether to access the first network device. In other words, the AI performance information, of the first network device, that is determined by the terminal device based on the AI model information of the first network device may be used as a basis for determining the network device accessed by the terminal device. Therefore, in a scenario in which the network device provides the AI service for the terminal device, the AI performance information of the network device is used as a basis for determining whether to access the network device, so that the terminal device subsequently accesses a network device with excellent AI performance information, and obtains an excellent AI service.

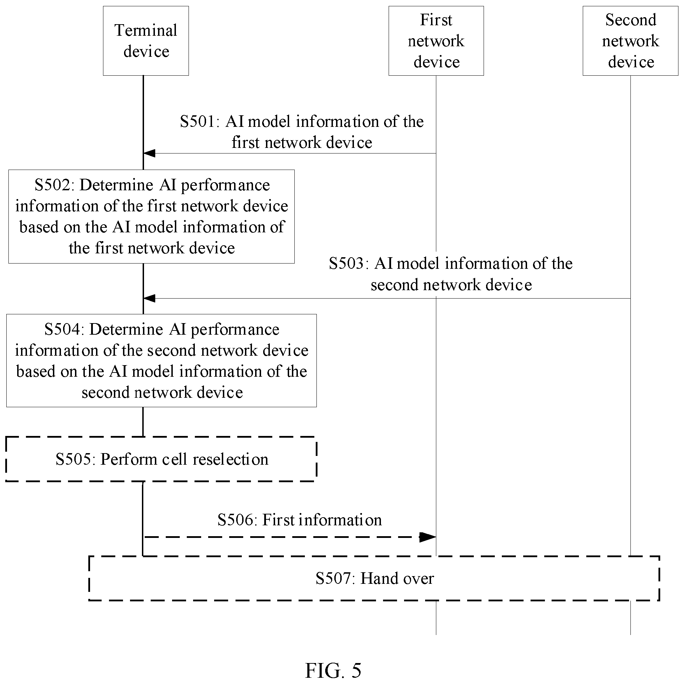

In the embodiment shown in FIG. 4 and the possible implementations of the embodiment, the first network device may be a network device in which a serving cell of the terminal device is located. In a possible implementation, after the terminal device obtains the AI model information of the first network device and determines the AI performance information of the first network device, the terminal device may further obtain AI model information of another network device (for example, a network device in which a neighboring cell is located), and further determine AI performance information of the another network device. The following further describes this implementation with reference to the embodiment shown in FIG. 5.

FIG. 5 is another diagram of a communication method according to this application. The method includes the following steps.

S501: A terminal device obtains AI model information of a first network device.

In this embodiment, in step S501, the first network device sends the AI model information of the first network device. Correspondingly, the terminal device receives the AI model information of the first network device.

S502: The terminal device determines AI performance information of the first network device based on the AI model information of the first network device.

In this embodiment, after the terminal device obtains the AI model information of the first network device in step S501, the terminal device determines the AI performance information of the first network device based on the AI model information of the first network device in step S402.

It should be noted that, for an implementation process of step S501 and step S502, refer to the implementation process of step S401 and step S402, and corresponding technical effect is implemented. For details, refer to content of the foregoing descriptions. Details are not described herein.

S503: The terminal device obtains AI model information of a second network device.

In this embodiment, in step S503, the terminal device receives the AI model information from the second network device. Correspondingly, the second network device sends the AI model information of the second network device in step S501.

In a possible implementation, in step S503, that the terminal device obtains AI model information of a second network device includes: When a value of the AI performance information of the first network device is less than a first threshold, the terminal device obtains the AI model information of the second network device in step S503.

Similarly, the AI performance information includes at least one of the following items: inference accuracy information, data distribution information, label distribution information, model prediction distribution information, or data importance information.

For example, the AI performance information may be a bit obtained after quantization and encoding are performed on a value corresponding to (the inference accuracy information, the data distribution information, the label distribution information, the model prediction distribution information, or the data importance information). Correspondingly, the value of the AI performance information may be a value corresponding to a bit obtained after the value corresponding to the "at least one piece" of information is quantized and encoded.

For example, the AI performance information includes the inference accuracy information, and bits after a value corresponding to the inference accuracy information is quantized and encoded are 2 bits. The value of the AI performance information is a value corresponding to the "2 bits", namely, 0 to 3. In other words, if the "2 bits" are "00", the value corresponding to the "2 bits" is "0"; if the "2 bits" are "01 ", the value corresponding to the "2 bits" is "1"; if the "2 bits" are "10", the value corresponding to the "2 bits" is "2"; or if the "2 bits" are "11", the value corresponding to the "2 bits" is "3". Further, optionally, the value of the AI performance information is positively correlated with quality of AI performance indicated by the AI performance information. For example, in this example, bits after a value corresponding to inference accuracy information of a specific network device is quantized and encoded are 2 bits. A larger value corresponding to the "2 bits" indicates better AI performance corresponding to the network device. On the contrary, a smaller value corresponding to the "2 bits" indicates poorer AI performance corresponding to the network device. Alternatively, the value of the AI performance information is negatively correlated with quality of AI performance indicated by the AI performance information. For example, in this example, bits after a value corresponding to inference accuracy information of a specific network device is quantized and encoded are 2 bits. A smaller value corresponding to the "2 bits" indicates better AI performance corresponding to the network device. On the contrary, a larger value corresponding to the "2 bits" indicates poorer AI performance corresponding to the network device.

Specifically, in addition to the case in which the terminal device determines the AI performance information of the first network device in step S502, when the value of the AI performance information, of the first network device, that is determined in step S502 is less than the first threshold, the terminal device may further send a request message to another network device, to obtain AI model information of the another network device (which includes the second network device). In addition, the terminal device determines AI performance information of the another network device based on the AI model information of the another network device, so that the terminal device subsequently accesses, based on AI performance information of a plurality of network devices, a network device with better AI performance information, and obtains a better AI service.

Optionally, when the value of the AI performance information of the first network device is equal to the first threshold, the terminal device determines the AI performance information of the second network device based on the AI model information of the second network device.

Optionally, when the value of the AI performance information of the first network device is greater than the first threshold, the terminal device may determine that the AI performance information of the first network device is good, and does not need to perform the implementation process of obtaining the AI model information of the second network device in step S503. In other words, if the terminal device determines that a good AI service can be obtained based on communication with the first network device, the terminal device does not need to obtain the AI model information of the another network device, and does not need to determine the AI performance information of the another network device based on the AI model information of the another network device.

S504: The terminal device determines the AI performance information of the second network device based on the AI model information of the second network device.

In this embodiment, after the terminal device obtains the AI model information of the second network device in step S504, the terminal device determines the AI performance information of the second network device based on the AI model information of the second network device in step S504.

In a possible implementation, in step S504, that the terminal device determines the AI performance information of the second network device based on the AI model information of the second network device includes: When the value of the AI performance information of the first network device is less than the first threshold, the terminal device determines the AI performance information of the second network device based on the AI model information of the second network device.

Specifically, in addition to the case in which the terminal device determines the AI performance information of the first network device in step S502, when the value of the AI performance information, of the first network device, that is determined in step S502 is less than the first threshold, the terminal device may further determine AI performance information of another network device, so that the terminal device subsequently accesses, based on AI performance information of a plurality of network devices, a network device with better AI performance information, and obtains a better AI service.

Optionally, when the value of the AI performance information of the first network device is equal to the first threshold, the terminal device determines the AI performance information of the second network device based on the AI model information of the second network device.

In a possible implementation, in step S504, a process in which the terminal device determines the AI performance information of the second network device based on the AI model information of the second network device may include: The terminal device obtains second data, where the second data is local data of the terminal device or the second data is data generated based on a second signal from the second network device; and the terminal device determines the AI performance information of the second network device based on the AI model information of the second network device and the second data.

Specifically, in the case in which the terminal device determines the AI performance information of the second network device based on the AI model information of the second network device, the terminal device may determine the AI performance information of the second network device based on the AI model information of the second network device and the second data.

In an implementation, when the second data used by the terminal device in step S504 is the local data of the terminal device, implementation complexity of the terminal device may be reduced. In addition, in a scenario in which the terminal device needs to determine AI performance information of a plurality of network devices, storage overheads of the terminal device may also be reduced by reusing the local data of the terminal device.

Optionally, similar to the implementation of the first data, when the second data is the local data of the terminal device, an AI service provided by the second network device for the terminal device may include but is not limited to an AI inference service and/or an AI model training service. The local data may include location data of the terminal device, environmental data sensed by a sensor (for example, an image sensor, a distance sensor, or a speed measurement sensor) of the terminal device, and the like.

In another implementation, when the second data used by the terminal device in step S504 is the data generated based on the second signal from the second network device, because bases (which include the AI model information and AI model input data) for determining the AI performance information of the second network device by the terminal device are all from the second network device, the AI performance information, of the second network device, that is determined by the terminal device can more comprehensively reflect the AI performance information of the second network device.

Optionally, similar to the implementation of the first data, when the second data is the data generated based on the second signal from the second network device, an AI service provided by the second network device for the terminal device may include but is not limited to an AI inference service and/or an AI model training service. The data generated based on the second signal from the second network device may include a signal related to transmission of a radio signal, for example, channel data between the network device and the terminal device, and location data of the network device.

In addition, for an implementation process of determining the AI performance information of the second network device in step S503 and step S504, refer to the implementation process of determining the AI performance information of the first network device in step S401 and step S402, and corresponding technical effect is implemented. For details, refer to the foregoing descriptions. Details are not described herein.

It should be noted that the AI performance information of the network device (which includes the first network device and/or the second network device) is determined by the AI model information and input data. Different AI performance information may be generated due to different AI model information, or may be generated due to different input data, or may be generated due to different AI model information and different input data.

Optionally, if the terminal device generates the first data and/or the second data based on the signal (which includes the first signal and/or the second signal) sent by the network device, the input data obtained by the terminal device may also be different. For example, if the first data is channel data generated when the terminal device is located in a city, and the second data is channel data generated when the terminal device is located in a suburb, distribution of buildings at different locations in the city is different from distribution of buildings at different locations in the suburb, and this may cause different input data. In this case, even if the terminal device uses same AI model information, AI performance information corresponding to the AI model information may change. In addition, it is generally held that AI performance information of different AI model information varies to some extent when input data is different.

In the implementation shown in FIG. 5, after the terminal device performs step S501 to step S504 to obtain the AI performance information of the first network device and/or the AI performance information of the second network device, the AI performance information of the first network device and/or the AI performance information of the second network device may be further used as the basis for determining whether to access the network device. The following further describes step S505 and step S506 in the implementation shown in FIG. 5.

In a possible implementation, after the terminal device determines the AI performance information of the first network device and/or the AI performance information of the second network device, the terminal device may locally determine, based on the AI performance information of the first network device and/or the AI performance information of the second network device, the network device accessed by the terminal device. An implementation process may be implemented through step S505 shown in FIG. 5.

S505: The terminal device performs cell reselection.

In this embodiment, for example, a network device in which a camping cell of the terminal device is located before step S505 is the first network device. The terminal device performs cell reselection when a first condition is met. The first condition includes any one of the following items:

a value of the AI performance information of the second network device is greater than (or equal to) the value of the AI performance information of the first network device;

the value of the AI performance information of the first network device is less than the first threshold and a value of the AI performance information of the second network device is greater than a second threshold; or

a value of the AI performance information of the second network device is greater than (or equal to) a second threshold.

Specifically, when the first network device is a network device in which a serving cell of the terminal device is located, the terminal device may further determine, based on the AI performance information of the first network device and/or the AI performance information of the second network device, whether to perform cell reselection, so that when the terminal device determines to perform cell reselection, the terminal device reselects a network device with better AI performance information, and obtains a better AI service.

Optionally, both the first threshold and the second threshold are preconfigured in the terminal device.

Optionally, the first threshold may be equal to the second threshold, or the first threshold may be less than the second threshold.

It should be understood that, in the foregoing "any one" example, an example in which the value of the AI performance information is positively correlated with AI performance indicated by the AI performance information is used for description. To be specific, a larger value of the AI performance information indicates better AI performance indicated by the AI performance information (where for example, higher AI inference accuracy indicates a smaller loss of AI model training, and the like). On the contrary, a smaller value of the AI performance information indicates poorer AI performance indicated by the AI performance information (where for example, lower AI inference accuracy indicates a larger loss of AI model training, and the like).

Optionally, the value of the AI performance information may alternatively be negatively correlated with AI performance indicated by the AI performance information. To be specific, a smaller value of the AI performance information indicates better AI performance indicated by the AI performance information (where for example, higher AI inference accuracy indicates a smaller loss of AI model training, and the like). On the contrary, a larger value of the AI performance information indicates poorer AI performance indicated by the AI performance information (where for example, lower AI inference accuracy indicates a larger loss of AI model training, and the like). In this case, the implementation may be expressed as follows.

The terminal device performs cell reselection when a second condition is met. The second condition includes any one of the following items:

the value of the AI performance information of the second network device is less than (or equal to) the value of the AI performance information of the first network device;

the value of the AI performance information of the first network device is greater than the first threshold and the value of the AI performance information of the second network device is less than the second threshold; or

the value of the AI performance information of the second network device is less than (or equal to) the second threshold.

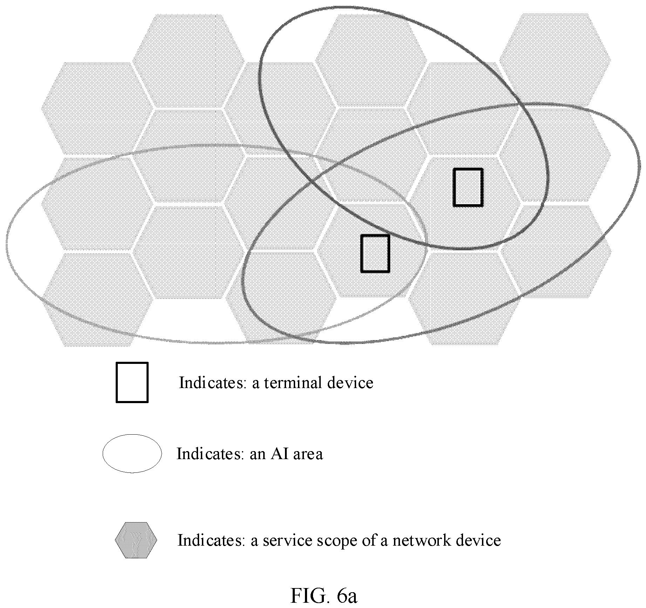

For example, in the implementation shown in FIG. 6a, the AI service obtained by the terminal device is an AI inference service. In FIG. 6a, an example in which a rectangle represents the terminal device, an ellipse represents an AI area (where the AI area represents an area in which a same or similar AI inference service can be provided), and a hexagon represents a service scope of the network device is used for description. It should be understood that the graph shown in FIG. 6a is merely an example, and may further represent related information by using another shape, for example, a triangle, a pentagon, or another regular graph or irregular graph. This is not limited herein.

In FIG. 6a, a same terminal device may be located in a communication reachable scope of a plurality of network devices. In addition, AI area coverage may overlap (that is, different elliptic areas in FIG. 6a may have overlapped areas), so that a same terminal device may access services of a plurality of AI models to obtain a plurality of AI inference services. The terminal device needs to evaluate, by using the implementation process of step S501 to step S504, performance of AI model information sent by different network devices (which include the network device in which the serving cell of the terminal device is located, a network device in which a neighboring cell of the terminal device is located, and the like). Then, in step S505, the terminal device determines, based on AI performance information of the different network devices, whether to perform cell reselection, so that when the terminal device determines to perform cell reselection, the terminal device reselects a network device with better AI performance information, and obtains a better AI service.

Based on the implementation shown in step S501 to step S504, the terminal device may determine the AI performance information of the plurality of network devices (which include the first network device and the second network device). In step S505, the terminal device may determine, based on the AI performance information of the network device, in the plurality of network devices, in which the serving cell on which the terminal device camps is located, whether step S503 needs to be performed, that is, determine whether AI performance information of another network device (namely, the network device in which the neighboring cell is located) needs to be measured. In addition, the terminal device may further determine, based on the AI performance information of the plurality of network devices, whether to perform cell reselection in step S505.

It should be understood that the first network device may be the network device in which the serving cell on which the terminal device camps is located, and the second network device may be a network device in which one or more neighboring cells of the serving cell are located. In addition, a quantity of second network devices is not limited in this application. For example, when there is one neighboring cell of the serving cell, there may be one second network device. For another example, when there are a plurality of neighboring cells of the serving cell, the plurality of neighboring cells may be located in a same physical device, that is, there may be one second network device. For another example, when there are a plurality of neighboring cells of the serving cell, the plurality of neighboring cells may be located in different physical devices, that is, there may be a plurality of second network devices.

Optionally, when there are the plurality of second network devices, that is, the terminal device determines the AI performance information of the plurality of second network devices in step S504, the terminal device may perform cell reselection in step S505 based on a cell frequency corresponding to a second network device with optimal AI performance information in the plurality of second network devices.

Optionally, when there are the plurality of second network devices, that is, the terminal device determines the AI performance information of the plurality of second network devices in step S504, the terminal device may determine, in step S505, one or more second network devices whose AI performance information is greater than a specific threshold, and perform cell reselection based on a cell frequency corresponding to any network device in the one or more second network devices.

Optionally, when there are the plurality of second network devices, that is, the terminal device determines the AI performance information of the plurality of second network devices in step S504, the terminal device may further select, from one or more second network devices with reference to communication performance (for example, load balancing or another scheduling policy), a cell frequency corresponding to one network device in the one or more second network devices to perform cell reselection after determining, in step S505, the one or more second network devices whose AI performance information is greater than a specific threshold.

For example, the AI performance information includes inference accuracy. The implementation process may be implemented in a manner shown in Table 1.

**Table 1**

| Event | Condition | Function |
|---|---|---|
| A1 | Serving cell inference accuracy<threshold 1 | Start measurement |
| A2 | Serving cell inference accuracy>threshold 2 | Stop measurement |
| A3 | Neighboring cell inference accuracy>serving cell inference accuracy | Start handover |
| A4 | Neighboring cell inference | Start handover |

(continued)

| Event | Condition | Function |
|---|---|---|
| | accuracy>threshold 2 | |
| A5 | Serving cell inference accuracy<threshold 1, and neighboring cell inference accuracy>threshold 2 | Start handover |

Therefore, based on the implementation of step S505, in a scenario in which the network device provides the AI service for the terminal device, an implementation of the measurement event oriented to the AI service is provided, and the AI performance information obtained through evaluation is used as a basis for determining selection (or reselection) of the AI serving cell, so that when the terminal device determines to perform cell reselection, the terminal device reselects a network device with better AI performance information, and obtains a better AI service.

In another possible implementation, after the terminal device determines the AI performance information of the first network device and/or the AI performance information of the second network device, the terminal device may report the AI performance information of the first network device and/or the AI performance information of the second network device, so that the network device determines the network device accessed by the terminal device. An implementation process may be implemented through step S506 shown in FIG. 5.

S506: The terminal device sends first information.

In this embodiment, the terminal device sends the first information in step S506. Correspondingly, the first network device receives the first information. The first information includes at least one of the following items: the AI performance information of the first network device; the AI performance information of the second network device; or relative information between the AI performance information of the first network device and the AI performance information of the second network device.

Specifically, the first network device may receive the AI performance information of the first network device and/or the AI performance information of the second network device in step S506. Therefore, the first network device subsequently uses the information as one of bases for determining whether to hand over the network device accessed by the terminal device, so that the terminal device can access a network device with better AI performance information, and obtain a better AI service.

Optionally, it may be learned from the content described in step S505 that the first network device may be the network device in which the serving cell on which the terminal device camps is located, and the second network device may be the network device in which the one or more neighboring cells of the serving cell are located. That is, there may be one or more second network devices. In other words, a plurality of implementations of the first information sent by the terminal device in step S506 may include: The first information includes AI performance information of some or all of the plurality of network devices, or the first information includes relative information of AI performance information of the plurality of network devices, where the "plurality of network devices" include the first network device and one or more second network devices.

Further, optionally, when the first information includes the AI performance information of some of the plurality of network devices, there may be one network device corresponding to the "some network devices", and the network device may be a network device with optimal AI performance information in the plurality of network devices; or there may be one or more network devices corresponding to the "some network devices", and in this case, the one or more network devices may be one or more network devices with values of AI performance information greater than a specific threshold in the plurality of network devices.

Further, optionally, when the first information includes the AI performance information of all of the plurality of network devices, the "all network devices" are the plurality of network devices, namely, the first network device and the one or more second network devices.

Further, optionally, when the first information includes the relative information of the AI performance information of the plurality of network devices, the relative information may indicate relative information between every two of the plurality of pieces of AI performance information corresponding to the plurality of network devices, or the relative information may indicate relative information between AI performance information of a network device other than AI performance information of a specific network device (for example, the first network device) and the AI performance information of the network device. Alternatively, there is another implementation. This is not limited herein.

Optionally, when a third condition is met, the terminal device triggers sending of the first information in step S506. The third condition includes any one of the following items:

the value of the AI performance information of the first network device is greater than a threshold;
the value of the AI performance information of the first network device is less than a threshold;

the value of the AI performance information of the second network device is greater than a threshold;

the value of the AI performance information of the second network device is less than a threshold;

the value of the AI performance information of the second network device is greater than the value of the AI performance information of the first network device; or

the value of the AI performance information of the first network device is less than the first threshold and the value of the AI performance information of the second network device is greater than the second threshold.

Specifically, when the first network device is the network device in which the serving cell of the terminal device is located, the terminal device may further trigger, based on the value of the AI performance information of the first network device and/or the value of the AI performance information of the second network device, reporting of these pieces of performance information in step S506. Therefore, the first network device subsequently uses the first information as one of bases for determining whether to hand over the network device accessed by the terminal device, so that the terminal device can access a network device with better AI performance information, and obtain a better AI service.

Optionally, before step S506, the network device sends configuration information to the terminal device. Correspondingly, the terminal device receives the configuration information from the network device. The configuration information is used to configure a time domain resource and/or a frequency domain resource that carry/carries the first information.

In a possible implementation, the first network device sends a handover request message after step S506 when any one of the following items is met:

the value of the AI performance information of the second network device is greater than the value of the AI performance information of the first network device;

the value of the AI performance information of the first network device is less than the first threshold and the value of the AI performance information of the second network device is greater than the second threshold; or

the value of the AI performance information of the second network device is greater than the second threshold.

Specifically, when the first network device is the network device in which the serving cell of the terminal device is located, the first network device may further determine, based on the AI performance information of the first network device and/or the AI performance information of the second network device, whether to hand over the network device accessed by the terminal device. In other words, after step S506, in the foregoing case, the terminal device, the first network device, and the second network device perform the handover procedure of step S507 shown in FIG. 5. Based on the handover procedure shown in step S507, the terminal device may be handed over from the first network device to the second network device. The first network device may send the handover request message based on the information, to hand over the terminal device to another network device, so that the terminal device can access a network device with better AI performance information, and obtain a better AI service.

Optionally, an implementation process of step S507 may include: The first network device sends the handover request message to the second network device; and the second network device sends a handover response message to the first network device. Then, the first network device may determine, based on the handover response message, that the second network device allows handing over the terminal device to the second network device, and further indicate to hand over the terminal device to the second network device.

Further, optionally, the "handover response message" may also be expressed as a "handover request acknowledgment message".

It should be understood that, in the foregoing "any one" example, an example in which the value of the AI performance information is positively correlated with AI performance indicated by the AI performance information is used for description. To be specific, a larger value of the AI performance information indicates better AI performance indicated by the AI performance information (where for example, higher AI inference accuracy indicates a smaller loss of AI model training, and the like). On the contrary, a smaller value of the AI performance information indicates poorer AI performance indicated by the AI performance information (where for example, lower AI inference accuracy indicates a larger loss of AI model training, and the like).

Optionally, the value of the AI performance information may alternatively be negatively correlated with AI performance indicated by the AI performance information. To be specific, a smaller value of the AI performance information indicates better AI performance indicated by the AI performance information (where for example, higher AI inference accuracy indicates a smaller loss of AI model training, and the like). On the contrary, a larger value of the AI performance information indicates poorer AI performance indicated by the AI performance information (where for example, lower AI inference accuracy indicates a larger loss of AI model training, and the like). In this case, the implementation may be expressed as follows.

The first network device sends a handover request message after step S506 when any one of the following items is met:

the value of the AI performance information of the second network device is less than the value of the AI performance information of the first network device;

the value of the AI performance information of the first network device is greater than the first threshold and the value of the AI performance information of the second network device is less than the second threshold; or

the value of the AI performance information of the second network device is less than the second threshold.

Optionally, that the first network device sends a handover request message includes: The first network device sends the handover request message to the terminal device, to indicate to hand over the terminal device to the second network device.

Optionally, that the first network device sends a handover request message includes: The first network device sends the handover request message to the second network device, to indicate to request to hand over the terminal device to the second network device.

In a possible implementation, the AI performance information included in the first information includes at least one of the following items: inference accuracy information, data distribution information, label distribution information, model prediction distribution information, or data importance information.

Optionally, the data importance information includes a weight change, a difference, a gradient, or the like for AI model training using the data.

The following describes examples of the implementation process shown in FIG. 5 with reference to the following plurality of implementation examples.

Example 1: The AI performance information in the first information reported by the terminal device in step S506 may include the inference accuracy information.

In Example 1, the measurement event performed by the terminal device is AI model performance evaluation. To be specific, the terminal device evaluates AI performance of different network devices based on step S502 and step S504, to determine inference accuracy information of a plurality of network devices. When reporting the first information in step S506, the terminal device may report, based on a quantization table, indexes corresponding to the inference accuracy information of the plurality of network devices.

Optionally, when the first information includes the indexes, the indexes may be implemented in a manner shown in Table 2.

**Table 2**

| Reporting value (namely, index) | Inference accuracy information |
| --- | --- |
| 0 | Acc<0.1 |
| 1 | $0.1 \leq Acc < 0.2$ |
| 2 | $0.2 \leq Acc < 0.3$ |
| 3 | $0.3 \leq Acc < 0.4$ |
| ... | ... |
| 62 | $0.95 \leq Acc < 0.99$ |
| 63 | $0.99 \leq Acc$ |

In Table 2, ACC represents inference accuracy (Accuracy) information, and a value range is from 0 to 1.

It should be understood that an interval obtained by dividing the inference accuracy information in Table 2 is merely an implementation example. During actual application, the inference accuracy information may be further determined in another quantized representation manner. This is not limited herein. For example, if a mean square error is used as the accuracy, the value range of ACC may be from 0 to infinity (infinity).

Optionally, reporting of the first information in step S506 may be triggered periodically, or may be triggered based on an event. Further, optionally, the event includes an absolute event or a relative event.

For example, the absolute event may be that inference precision information of a specific network device is greater than a threshold. An implementation may be expressed as follows.

If Acc-margin>threshold is met, the terminal device is triggered to report the first information in step S506.

If Acc+margin<threshold is met, the terminal device is triggered not to report the first information in step S506.

If Acc_n+Offset_n+margin<Acc_t+Offset_t is met, the terminal device is triggered to report the first information in step S506.

Acc_n is AI inference accuracy information of a network device (for example, the first network device in the foregoing embodiment) in which a serving cell is located, Acc_t is AI inference accuracy information of a network device (for example, the second network device in the foregoing embodiment) in which a neighboring cell is located, margin is a reserved margin (which is an optional item, that is, a value may be 0), threshold is a threshold, and Offset is an AI inference accuracy offset (which is an optional item, that is, a value may be 0).

Optionally, the AI inference accuracy offset is related to the model information, that is, AI inference accuracy information of different models may be different. If AI inference accuracy information of different cells is different, there is an offset during handover for load balancing between cells. Otherwise, the terminal device is tended to be handed over to a cell with better AI inference accuracy information.

Optionally, if $Acc\_n+Offset\_n-margin>Acc\_t+Offset\_t$ is met, and the terminal device reports the first information in step S506, the first network device may not send the handover request message after step S506; or after the first network device sends the handover request message in step S507, the second network device may send a rejection message, so that the terminal device is not handed over to the second network device.

Optionally, before step S506, the network device may configure, for the terminal device, a time-frequency resource that carries the first information.

Further, optionally, the relative event may be further used to trigger execution of step S505 described above. An implementation may be expressed as follows.

If $Acc\_n+Offset\_n-margin>Acc\_t+Offset\_t$ is met, the terminal device is triggered not to perform cell reselection, that is, the terminal device does not need to perform cell reselection in step S505.

If $Acc\_n+Offset\_n+margin<Acc\_t+Offset\_t$ is met, the terminal device is triggered to perform cell reselection, that is, the terminal device performs cell reselection in step S505.

Therefore, based on the implementation shown in Example 1, the terminal device may measure and report model inference performance, to be handed over to an AI serving cell with good inference accuracy information, so that the terminal device obtains an AI inference service with excellent performance.

Example 2: The AI performance information in the first information reported by the terminal device in step S506 may include the data distribution information, where the data distribution information may include data distribution information of input data and/or data distribution information of output data.

In Example 2, the measurement event performed by the terminal device is AI model performance evaluation. To be specific, the terminal device evaluates AI performance of different network devices based on step S502 and step S504, to determine data distribution information corresponding to output data obtained after AI model information provided by a plurality of network devices is for processing input data.

Optionally, the data distribution information may include a data similarity, data distribution, or a data distribution distance. Further, optionally, the data similarity may be defined as a similarity of data distribution, for example, a cosine (cosine, cos) distance or a Kullback-Leibler (kullback-leibler, KL) distance.

Optionally, reporting of the first information in step S506 may be triggered periodically, or may be triggered based on an event. Further, optionally, the event includes a data distribution offset event. An implementation may be expressed as follows.

If $Dist(data\_n, data\_t)-margin>threshold$ is met, the terminal device is triggered to report the first information in step S506.

If $Dist(data\_n, data\_t)+margin<threshold$ is met, the terminal device is triggered not to report the first information in step S506.

$Dist(data\_n, data\_t)$ represents a data distribution distance corresponding to different network devices (where for example, "data_n" may represent the first network device in the foregoing embodiment, and "data_t" may represent the second network device in the foregoing embodiment), and margin is a reserved margin (which is an optional item, that is, a value may be 0).

Further, optionally, the event may be further used to trigger execution of step S505 described above. An implementation may be expressed as follows.

If $Dist(data\_n, data\_t)-margin>threshold$ is met, the terminal device is triggered to perform cell reselection, that is, the terminal device does not need to perform cell reselection in step S505.

If $Dist(data\_n, data\_t)+margin<threshold$ is met, the terminal device is triggered not to perform cell reselection, that is, the terminal device performs cell reselection in step S505.

Therefore, based on the implementation shown in Example 2, after receiving the data distribution distance, the network device may evaluate model performance, perform handover, update an AI model, or the like. In addition, the terminal device measures and reports data distribution, to be handed over to a good AI serving cell, so that the terminal device obtains an AI inference service with excellent performance.

Example 3: The AI performance information in the first information reported by the terminal device in step S506 may include the data importance information.

In Example 3, the measurement event performed by the terminal device is AI model performance evaluation. To be specific, the terminal device evaluates AI performance of different network devices based on step S502 and step S504, to determine a training result of AI model information obtained after AI model information provided by a plurality of network devices and corresponding input data provided by the plurality of network devices are processed, to determine data importance information of input data provided by the different network devices.

Optionally, in step S505, the terminal device may participate in AI training of the plurality of network devices, and determine, based on data importance, whether to perform cell reselection for AI training.

Optionally, the terminal device may use the data importance as some or all of the first information, and feed back the data importance to the network device in step S506. Further, optionally, reporting of the first information in step S506 may be triggered periodically, or may be triggered based on an event. The event includes a data importance event. An implementation may be expressed as follows.

If Delta_imp(data _n)-margin>threshold is met, the terminal device is triggered to report the first information in step S506.

If Delta _imp(data_n)+margin<threshold is met, the terminal device is triggered not to report the first information in step S506.

Delta_imp(data_n) is a data importance difference corresponding to different network devices (where for example, "data_n" may represent local data of the terminal device in the foregoing embodiment), margin is a reserved margin (which is an optional item, that is, a value may be 0), and threshold is a threshold.

Further, optionally, the event may be further used to trigger execution of step S505 described above. An implementation may be expressed as follows.

If Delta_imp(data _n)-margin>threshold is met, the terminal device is triggered to perform cell reselection, that is, the terminal device does not need to perform cell reselection in step S505.

If Delta _imp(data_n)+margin<threshold is met, the terminal device is triggered not to perform cell reselection, that is, the terminal device performs cell reselection in step S505.

Therefore, based on the implementation shown in Example 3, after receiving the data importance difference, the network device evaluates training performance, to determine whether to hand over the network device accessed by the terminal device. In addition, the terminal device measures and reports the data importance, to be handed over to a good AI serving cell, to improve AI model training efficiency, so that the terminal device obtains an AI inference service with excellent performance.

Example 4: The AI performance information in the first information reported by the terminal device in step S506 may include the weight in the data importance information.

In Example 4, the measurement event performed by the terminal device is AI model performance evaluation. To be specific, the terminal device evaluates AI performance of different network devices based on step S502 and step S504, to determine a weight in data importance information of output data obtained after AI model information provided by a plurality of network devices and corresponding input data provided by the plurality of network devices are processed.

Optionally, the weight in the data importance information of the output data may be represented as a weight difference before or after AI model processing. An implementation may be expressed as follows:

$$dW = |W(n+1) - W(n)| / |W(n)|,$$

where

dW indicates the weight difference, W(n+1) indicates the weight after AI model processing, and W(n) indicates the weight before AI model processing.

Optionally, reporting of the first information in step S506 may be triggered periodically, or may be triggered based on an event.

Further, optionally, the event includes an absolute weight change event. An implementation of the event may be expressed as follows.

If dW-margin>threshold is met, the terminal device is triggered to report the first information in step S506.

If dW+margin<threshold is met, the terminal device is triggered to report the first information in step S506.

margin is a reserved margin (which is an optional item, that is, a value may be 0), and threshold is a threshold.

Further, optionally, when "dW" is the weight difference corresponding to the first network device, the absolute event may be further used to trigger execution of step S503 and step S504. An implementation may be expressed as follows.

If dW-margin>threshold is met, the terminal device is triggered to stop evaluating the AI model performance of the another network device, that is, the terminal device does not need to perform step S503 and step S504. In other words, the terminal device does not need to obtain the AI model information of the another network device in step S503, and does not need to determine the AI performance information of the another network device based on the AI model information of the another network device in step S504.

If dW+margin<threshold is met, the terminal device is triggered to start to evaluate the AI model performance of the another network device, that is, the terminal device performs step S503 and step S504. In other words, the terminal device obtains the AI model information of the another network device in step S503, and determines the AI performance information of the another network device based on the AI model information of the another network device in step S504.

Further, optionally, when "dW" is the weight difference corresponding to the first network device, the absolute event may be further used to trigger execution of step S505. An implementation may be expressed as follows.

If dW-margin>threshold is met, the terminal device is triggered not to perform cell reselection, that is, the terminal device does not need to perform cell reselection in step S505.

If dW+margin<threshold is met, the terminal device is triggered to perform cell reselection, that is, the terminal device performs cell reselection in step S505.

Further, optionally, when "dW" is the weight difference corresponding to the second network device, the absolute event may be further used to trigger execution of step S505. An implementation may be expressed as follows.

If dW-margin>threshold is met, the terminal device is triggered to perform cell reselection, that is, the terminal device performs cell reselection in step S505.

If dW+margin<threshold is met, the terminal device is triggered not to perform cell reselection, that is, the terminal device does not need to perform cell reselection in step S505.

Further, optionally, the event includes an absolute weight change event. An implementation of the event may be expressed as follows.

If dW_n+Offset_n-margin>dW_t+Offset_t is met, the terminal device is triggered to report the first information without performing step S506.

If dW_n+Offset_n+margin<dW_t+Offset_t is met, the terminal device is triggered to report the first information in step S506.

dW_n and dW_t respectively represent weight differences before and after AI model processing corresponding to different network devices (for example, "dW_n" may represent the first network device in the foregoing embodiment, and "dW_t" may represent the second network device in the foregoing embodiment), and Offset is an accuracy offset (which is an optional item, that is, a value may be 0), and is related to the model information. Different models may have different standards.

Optionally, smaller dW indicates a smaller contribution of the training node of the terminal device to overall model training of the cell. In this case, the terminal device may be handed over to the neighboring cell, to help training of the neighboring cell.

Optionally, dW in Example 4 may also be defined in another manner, for example, dLoss, namely, a decrease degree of the loss, or an uncertainty degree of inference, that is, H(f(data)), namely, entropy of a probability output by inference f.

Further, optionally, the event may be further used to trigger execution of step S505 described above. An implementation may be expressed as follows.

If dW_n+Offset_n-margin>dW_t+Offset_t is met, the terminal device is triggered not to perform cell reselection, that is, the terminal device does not need to perform cell reselection in step S505.

If dW_n+Offset_n+margin<dW_t+Offset_t is met, the terminal device is triggered to perform cell reselection, that is, the terminal device performs cell reselection in step S505.

Therefore, based on the implementation shown in Example 4, the terminal device measures and reports the weight in the data importance information, to be handed over to a better AI serving cell, to improve AI model training efficiency, so that the terminal device obtains an AI inference service with excellent performance.

In addition, it may be learned from the foregoing descriptions shown in FIG. 6a that the AI model information downloaded by the terminal device is usually obtained through training by the network device, and participating in training is usually performed on the network device corresponding to the cell in which the terminal device is located. For example, the AI service obtained by the terminal device is an AI inference service. That is, the terminal device needs to download the AI model information, and the downloaded AI model information is usually obtained through network training.

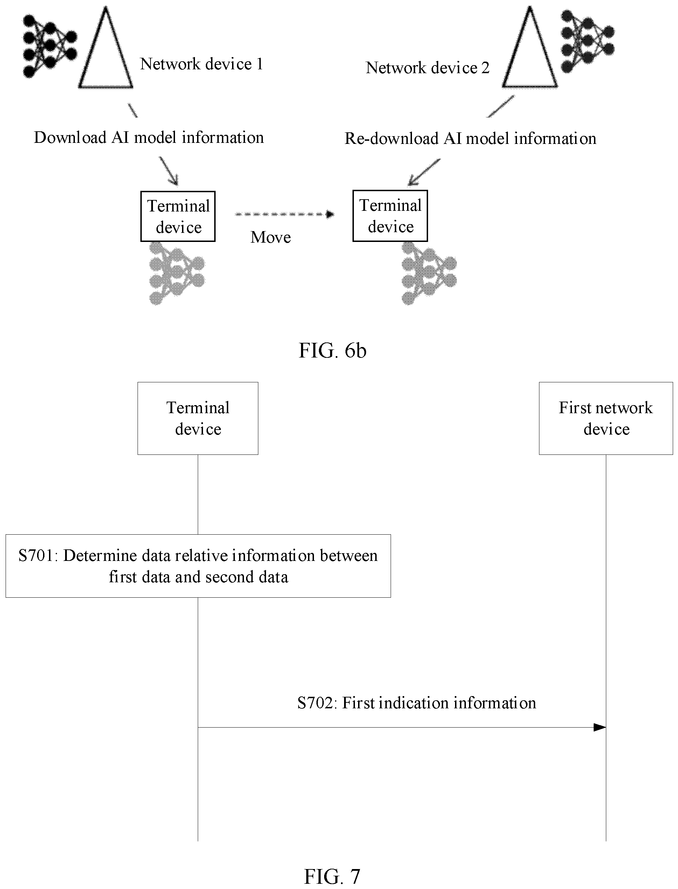

Generally, because model downloading is performed for the cell in which the terminal is located, when mobility of the terminal is not considered, an entire downloading or training process needs to be performed again when the terminal moves. For example, as shown in FIG. 6b, before the terminal device moves, the terminal device may download the AI model information from a network device 1, to locally perform AI inference on the terminal device after downloading the AI model information, and obtain an AI inference result. After the terminal device moves, the terminal device may be handed over from the network device 1 to a network device 2, and re-download the AI model information from a BS 2, to locally perform AI inference on the terminal device after downloading the AI model information, and obtain an AI inference result.

However, different network devices may provide a same or similar AI service. In a process in which the terminal device is handed over between different network devices, a process of "downloading" and a process of "re-downloading" in the implementation example shown in FIG. 6b may be unnecessary processes, causing unnecessary overheads and a high transmission latency of the AI model information, and affecting user experience.

To resolve the technical problem, the following further describes the technical problem with reference to more accompanying drawings and embodiments.

FIG. 7 is another diagram of a communication method according to this application. The method includes the following steps.

S701: A terminal device determines data relative information between first data and second data.

In this embodiment, after the terminal device generates the first data based on a first signal from a first network device, and the terminal device generates the second data based on a second signal from a second network device, the terminal device determines the data relative information between the first data and the second data in step S701.

Optionally, the first data may include input data of an AI model and/or output data of the AI model. Similarly, the second data may also include input data of an AI model and/or output data of the AI model. Further, optionally, the input data of the AI model may include inference data distribution information, model prediction distribution, or the like. The output data of the AI model may include label distribution information, model prediction distribution information, or the like.

For example, when the first data includes the input data of the AI model and the second data includes the input data of the AI model, the data relative information may indicate data relative information between the two pieces of input data.

For another example, when the first data includes the output data of the AI model and the second data includes the output data of the AI model, the data relative information may indicate data relative information between the two pieces of output data.

For another example, when the first data includes the input data of the AI model and the output data of the AI model, and the second data includes the input data of the AI model and the output data of the AI model, the data relative information includes two pieces of information. One piece of information may indicate data relative information between the two pieces of input data, and the other piece of information may indicate data relative information between the two pieces of output data.

Optionally, the data relative information includes a data distribution distance or a data similarity.

For example, when the data relative information includes the data distribution distance, the terminal device may determine the data distribution distance between the first data and the second data in step S701. For example, the data distribution distance may include a cos example, a KL distance, or the like. When the data relative information includes the data similarity, the terminal device may determine, in step S701, a data similarity between data content included in the first data and data content included in the second data. For example, the data similarity may be represented in a form of a fraction (for example, 0.3, 0.6, or 0.9), or may be represented in a form of a percentage (for example, 30%, 60%, or 90%), or may be implemented in another form. This is not limited herein.

S702: The terminal device sends first indication information to the network device.

Correspondingly, the network device receives the first indication information. The first indication information indicates the data relative information.

Optionally, before step S702, the network device sends configuration information to the terminal device. Correspondingly, the terminal device receives the configuration information from the network device. The configuration information is used to configure a time domain resource and/or a frequency domain resource that carry/carries the first indication information.

Specifically, after step S702, the first network device may determine AI area information of the first network device and AI area information of the second network device based on the data relative information.

Optionally, after that the first network device determines AI area information of the first network device and AI area information of the second network device based on the data relative information, the method further includes: The first network device determines, based on the determined AI area information, whether the first network device and the second network device are located in a same AI area.

Optionally, network devices located in a same AI area have a same/similar AI model.

Optionally, network devices located in a same AI area can provide a same/similar AI service.

Therefore, if the network device determines, based on the determined AI area information, that the first network device and the second network device are in a same AI area, when the terminal device is handed over between the first network device and the second network device, overheads caused by downloading (or re-downloading) unnecessary AI model information may be reduced, and the terminal device may obtain a same/similar AI service in a handover process.

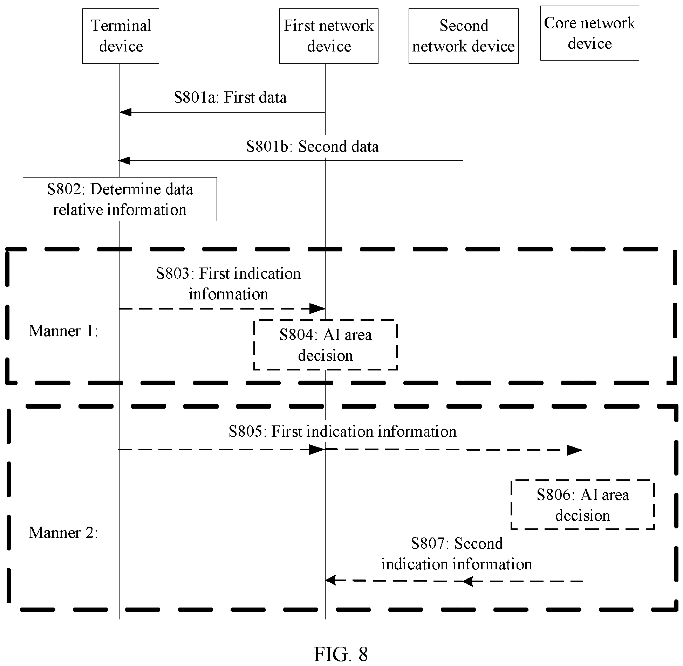

Based on the implementation shown in FIG. 8, the following further describes an implementation process in which the first network device determines the AI area information of the first network device and the AI area information of the second network device. In an implementation process of the following manner 1, the first network device locally executes an AI area decision. In an implementation process of the following manner 2, the first network device assists in executing an AI area decision through another network device.

It should be noted that, for an implementation of step S801a, step S801b, and step S802 shown in FIG. 8, refer to the implementation process of step S701, and corresponding technical effect is implemented. For details, refer to the foregoing descriptions. Details are not described herein.

In a possible implementation, in the manner 1 shown in FIG. 8, that the first network device determines AI area information of the first network device and AI area information of the second network device based on the data relative information includes: After receiving the first indication information in step S803, the first network device performs the AI area decision in step S804. That is, in step S804, the first network device locally determines the AI area information of the first network device and the AI area information of the second network device based on the data relative information.

Optionally, the first network device is a network device in which a serving cell of the terminal device is located, and the second network device is a network device in which a neighboring cell of the serving cell of the terminal device is located.

Specifically, after the first network device receives the first indication information in step S702, the first network device may locally determine the AI area information of the first network device and the AI area information of the second network device based on the data relative information indicated by the first indication information. In this way, the determining process is locally performed by the first network device, and no other device is required to assist in decision-making, thereby reducing overheads.

In another possible implementation, as shown in the manner 2 in FIG. 8, that the first network device determines, based on the data relative information, whether the first network device and the second network device are located in a same AI area includes: The first network device sends the data relative information to another network device (for example, a core network device) in step S805, so that the another network device performs the AI area decision in step S806. Then, in step S807, the another network device sends a decision result of the AI area decision to the first network device (or may send the decision to the second network device). In other words, in step S807, the first network device receives second indication information sent by the another network device, where the second indication information indicates the AI area information of the first network device and the AI area information of the second network device.

Specifically, after the first network device receives the first indication information, the first network device may send the data relative information to another network device, so that the another network device assists in decision-making, to determine the AI area information of the first network device and the AI area information of the second network device. In this way, the determining process is performed by the another network device, so that computing power consumption of the first network device is reduced. In addition, in a scenario in which there are a large quantity of terminal devices, a plurality of network devices (which include the first network device, the second network device, and the like) may aggregate, to the another network device, first indication information reported by the plurality of terminal devices, to perform macro-control on AI services of the plurality of terminal devices in the another network device.

For example, the first indication information that is reported by the terminal device in step S702 and that indicates the data relative information may include the data relative information between the first data and the second data, and the data relative information may include the similarity. The similarity may be defined as a similarity of data distribution, for example, a cosine distance or a KL distance. In step S702, the terminal device may report a distribution parameter of a local data set, or report data distribution distances of data (which includes the first data and the second data) corresponding to different network devices.

Optionally, the similarity may indicate that an index is reported after quantization based on the implementation of Table 3.

**Table 3**

| Reporting value (namely, index) | Similarity *64 |
|---|---|
| 0 | sim<1 |
| 1 | 1≤sim<2 |
| 2 | 2≤sim<3 |
| 3 | 3≤sim<4 |
| ... | |
| 61 | 61≤sim<62 |
| 62 | 62≤sim<63 |
| 63 | 63≤sim≤64 |

It should be understood that an interval obtained by dividing the similarity in Table 3 is merely an implementation example. During actual application, the similarity may be further determined in another quantized representation manner. This is not limited herein.

Based on the foregoing technical solution, after the terminal device generates the first data based on the first signal from the first network device, and the terminal device generates the second data based on the second signal from the second network device, the terminal device determines the data relative information between the first data and the second data in step S701. Then, the terminal device sends, in step S702, the first indication information for indicating the data relative information, so that after the network device receives the first indication information, the network device may determine the AI area information of the first network device and the AI area information of the second network device based on the data relative information. In a scenario in which the network device provides an AI service for the terminal device, the network device may determine whether different network devices are located in a same AI area, and further use a determining result as a basis for handing over a network device accessed by the terminal device, so that the terminal device accesses a network device with excellent AI performance information, and obtains an excellent AI service.

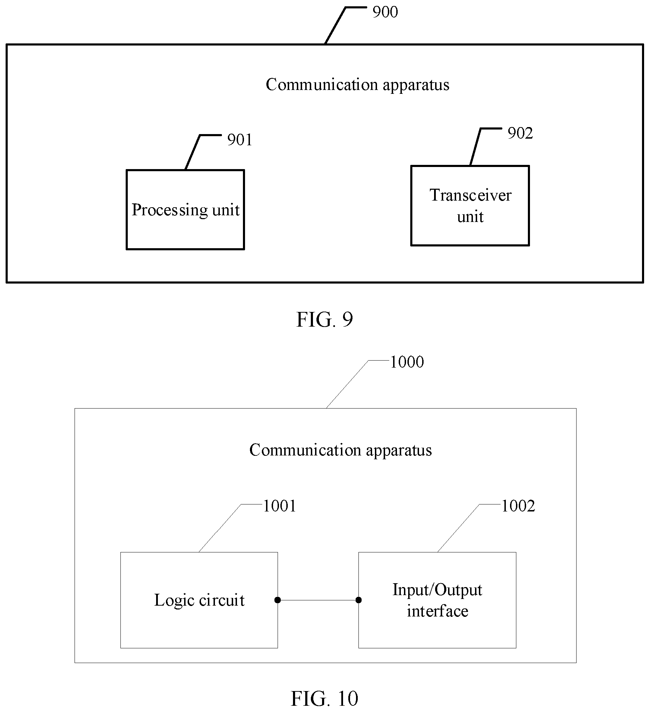

Refer to FIG. 9. An embodiment of this application provides a communication apparatus 900. The communication apparatus 900 may implement functions of the terminal device (or the network device) in the foregoing method embodiments, and therefore can also implement beneficial effect of the foregoing method embodiments. In this embodiment of this application, the communication apparatus 900 may be a terminal device (or a network device), or may be an integrated circuit or an element, for example, a chip, in the terminal device (or the network device). In the following embodiments, an example in which the communication apparatus 900 is the terminal device or the network device is used for description.

In a possible implementation, when the apparatus 900 is configured to perform the method performed by the terminal device in any one of the foregoing embodiments, the apparatus 900 includes a processing unit 901 and a transceiver unit 902. The transceiver unit 902 is configured to obtain AI model information of a first network device. The processing unit 901 is configured to determine AI performance information of the first network device based on the AI model information of the first network device.

In a possible implementation, the processing unit 901 is specifically configured to: obtain first data, where the first data is local data of the communication apparatus 900 or the first data is data generated based on a first signal from the first network device; and determine the AI performance information of the first network device based on the AI model information of the first network device and the first data.

In a possible implementation, the transceiver unit 902 is further configured to obtain AI model information of a second network device.

The processing unit 901 is further configured to determine AI performance information of the second network device based on the AI model information of the second network device.

In a possible implementation, the processing unit 901 is specifically configured to: when determining that a value of the AI performance information of the first network device is less than a first threshold, control the transceiver unit 902 to obtain the AI model information of the second network device.

In a possible implementation, the processing unit 901 is specifically configured to: obtain second data, where the second data is local data of the communication apparatus 900 or the second data is data generated based on a second signal from the second network device; and determine the AI performance information of the second network device based on the AI model information of the second network device and the second data.

In a possible implementation, the first network device is a network device in which a serving cell of the communication apparatus 900 is located; and the processing unit 901 is further configured to perform cell reselection when any one of the following items is met: a value of the AI performance information of the second network device is greater than the value of the AI performance information of the first network device; the value of the AI performance information of the first network device is less than the first threshold and a value of the AI performance information of the second network device is greater than a second threshold; or a value of the AI performance information of the second network device is greater than a second threshold.

In a possible implementation, the transceiver unit 902 is further configured to send first information to the first network device, where the first information includes at least one of the following items: the AI performance information of the first network device; the AI performance information of the second network device; or relative information between the AI performance information of the first network device and the AI performance information of the second network device.

In a possible implementation, the AI model information includes parameter information of an AI model, for example, at least one of weight information or bias information.

In a possible implementation, the AI performance information includes at least one of the following items: inference accuracy information, data distribution information, label distribution information, model prediction distribution information, or data importance information.

In a possible implementation, the data importance information includes a weight change, a difference, a gradient, or the like for AI model training using the data.

In a possible implementation, the first data includes at least one of the following items: input data or label data.

In a possible implementation, when the apparatus 900 is configured to perform the method performed by the network device in any one of the foregoing embodiments, the apparatus 900 includes a processing unit 901 and a transceiver unit 902. The processing unit 901 is configured to determine AI model information of a first network device, where the AI model information of the first network device is used to determine AI performance information of the first network device. The transceiver unit 902 is configured to send the AI model information of the first network device.

In a possible implementation, the transceiver unit 902 is further configured to receive first information, where the first information includes at least one of the following items: the AI performance information of the first network device; or AI performance information of a second network device; or

relative information between the AI performance information of the first network device and AI performance information of a second network device.

In a possible implementation, the transceiver unit 902 is further configured to send a handover request message when any one of the following items is met: a value of the AI performance information of the second network device is greater than a value of the AI performance information of the first network device; a value of the AI performance information of the first network device is less than a first threshold and a value of the AI performance information of the second network device is greater than a second threshold; or a value of the AI performance information of the second network device is greater than a second threshold.

In a possible implementation, the transceiver unit 902 is further configured to send a first signal, where the first signal is used to generate first data, and the first data is used to determine the AI performance information of the first network device.

In a possible implementation, the AI model information includes parameter information of an AI model, for example, at least one of weight information or bias information.

In a possible implementation, the AI performance information includes at least one of the following items: inference accuracy information, data distribution information, label distribution information, model prediction distribution information, or data importance information.

In a possible implementation, the data importance information includes a weight change, a difference, a gradient, or the like for AI model training using the data.

In a possible implementation, the first data includes at least one of the following items: input data or label data.

In a possible implementation, when the apparatus 900 is configured to perform the method performed by the terminal device in any one of the foregoing embodiments, the apparatus 900 includes a processing unit 901 and a transceiver unit 902. The processing unit 901 is configured to determine data relative information between first data and second data, where the first data is data generated based on a first signal from a first network device, and the second data is data generated based on a second signal from a second network device. The transceiver unit 902 is configured to send first indication information, where the first indication information indicates the data relative information.

In a possible implementation, the data relative information includes a data distribution distance or a data similarity.

In a possible implementation, the first network device is a network device in which a serving cell of the terminal device is located.

In a possible implementation, when the apparatus 900 is configured to perform the method performed by the terminal device in any one of the foregoing embodiments, the apparatus 900 includes a processing unit 901 and a transceiver unit 902. The transceiver unit 902 is configured to receive first indication information from the terminal device, where the first indication information indicates data relative information between first data and second data, the first data is data generated based on a first signal from a first network device, and the second data is data generated based on a second signal from a second network device. The processing unit 901 is configured to determine AI area information of the first network device and AI area information of the second network device based on the data relative information.

Optionally, the processing unit 901 is further configured to determine, based on the determined AI area information, whether the first network device and the second network device are located in a same AI area.

In a possible implementation, the data relative information includes a data distribution distance or a data similarity.

In a possible implementation, the first network device is a network device in which a serving cell of the terminal device is located.

It should be noted that for specific content such as an information execution process of the units of the communication apparatus 900, refer to descriptions in the foregoing method embodiments of this application. Details are not described herein again.

FIG. 10 is another diagram of a structure of a communication apparatus 1000 according to this application. The communication apparatus 1000 includes at least an input/output interface 1002. The communication apparatus 1000 may be a chip or an integrated circuit.

Optionally, the communication apparatus further includes a logic circuit 1001.

The transceiver unit 902 shown in FIG. 9 may be a communication interface. The communication interface may be the input/output interface 1002 in FIG. 10. The input/output interface 1002 may include an input interface and an output interface. Alternatively, the communication interface may be a transceiver circuit, and the transceiver circuit may include an input interface circuit and an output interface circuit.

Optionally, the input/output interface 1002 is configured to obtain AI model information of a first network device. The logic circuit 1001 is configured to determine AI performance information of the first network device based on the AI model information of the first network device. The logic circuit 1001 and the input/output interface 1002 may further perform other steps performed by the terminal device in any one of the foregoing embodiments, and implement corresponding beneficial effect. Details are not described herein again.

Optionally, the logic circuit 1001 is configured to generate the AI model information of the first network device. The input/output interface 1002 is configured to send the AI model information of the first network device. The logic circuit 1001 and the input/output interface 1002 may further perform other steps performed by the network device in any one of the foregoing embodiments, and implement corresponding beneficial effect. Details are not described herein again.

In a possible implementation, the processing unit 901 shown in FIG. 9 may be the logic circuit 1001 in FIG. 10.

Optionally, the logic circuit 1001 may be a processing apparatus, and some or all functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), application-specific integrated circuits (application-specific integrated circuits, ASICs), system on chips (system on chips, SoCs), central processing units (central processing units, CPUs), network processors (network processors, NPs), digital signal processors (digital signal processors, DSPs), micro controller units (micro controller units, MCUs), programmable logic devices (programmable logic devices, PLDs) or other integrated chips, or any combination of the foregoing chips or processors.

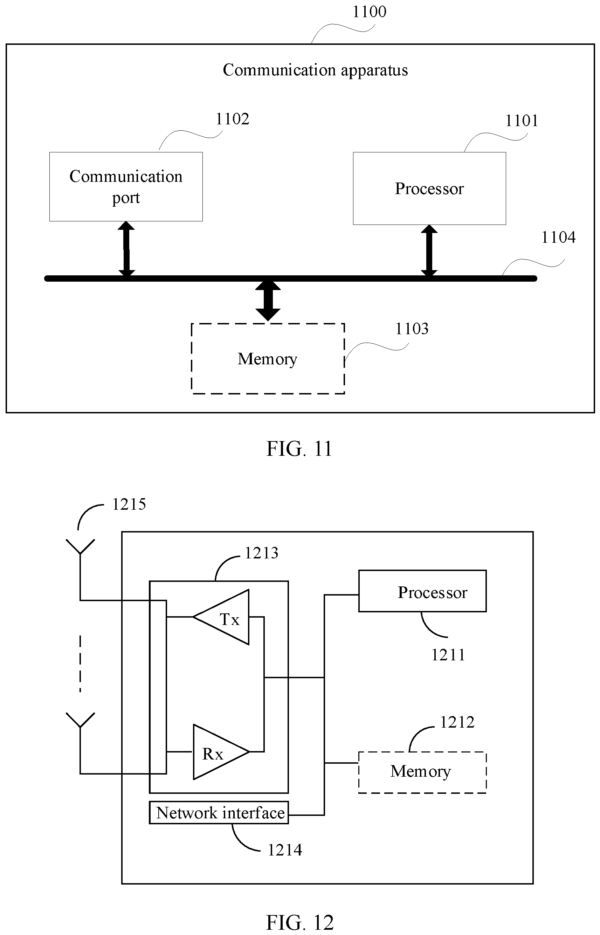

FIG. 11 shows a communication apparatus 1100 in the foregoing embodiment according to an embodiment of this application. The communication apparatus 1100 may be specifically a communication apparatus used as a terminal device in the foregoing embodiment. An example shown in FIG. 11 is that the terminal device is implemented through the terminal device (or a component in the terminal device).

In a possible schematic diagram of a logical structure of the communication apparatus 1100, the communication apparatus 1100 may include but is not limited to at least one processor 1101 and a communication port 1102.

Further, optionally, the apparatus may further include at least one of a memory 1103 and a bus 1104. In this embodiment of this application, the at least one processor 1101 is configured to perform control processing on an action of the communication apparatus 1100.

In addition, the processor 1101 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that, the communication apparatus 1100 shown in FIG. 11 may be specifically configured to implement steps implemented by the terminal device in the foregoing method embodiments, and implement technical effect corresponding to the terminal device. For a specific implementation of the communication apparatus shown in FIG. 11, refer to the descriptions in the foregoing method embodiments. Details are not enumerated herein again.

FIG. 12 is a diagram of a structure of a communication apparatus 1200 in the foregoing embodiment according to an embodiment of this application. The communication apparatus 1200 may be specifically the communication apparatus used as a network device in the foregoing embodiment. An example shown in FIG. 12 is that the network device is implemented through the network device (or a component in the network device). For a structure of the communication apparatus, refer to the structure shown in FIG. 12.

The communication apparatus 1200 includes at least one processor 1211 and at least one network interface 1214. Further, optionally, the communication apparatus further includes at least one memory 1212, at least one transceiver 1213, and one or more antennas 1215. The processor 1211, the memory 1212, the transceiver 1213, and the network interface 1214 are connected, for example, through a bus. In this embodiment of this application, the connection may include various interfaces, transmission lines, buses, or the like. This is not limited in this embodiment. The antenna 1215 is connected to the transceiver 1213. The network interface 1214 is configured to enable the communication apparatus to communicate with another communication device through a communication link. For example, the network interface 1214 may include a network interface between the communication apparatus and a core network device, for example, an S 1 interface. The network interface may include a network interface between the communication apparatus and another communication apparatus (for example, another network device or core network device), for example, an X2 or Xn interface.

The processor 1211 is mainly configured to: process a communication protocol and communication data, control the entire communication apparatus, execute a software program, and process data of the software program. For example, the processor 1211 is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1211 in FIG. 12. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and various components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store a software program and data. The memory 1212 may exist independently, or may be connected to the processor 1211. Optionally, the memory 1212 may be integrated with the processor 1211. For example, the memory 1212 and the processor 1211 are integrated into one chip. The memory 1212 can store program code for performing the technical solutions in embodiments of this application, and the processor 1211 controls execution of the program code. Various types of executed computer program code may also be considered as drivers of the processor 1211.

FIG. 12 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1213 may be configured to support receiving or sending of a radio frequency signal between the communication apparatus and the terminal, and the transceiver 1213 may be connected to the antenna 1215. The transceiver 1213 includes a transmitter machine Tx and a receiver machine Rx. Specifically, the one or more antennas 1215 may receive the radio frequency signal. The receiver machine Rx of the transceiver 1213 is configured to: receive the radio frequency signal from the antenna, convert the radio frequency signal into a digital baseband signal or a digital intermediate frequency signal, and provide the digital baseband signal or the digital intermediate frequency signal for the processor 1211, so that the processor 1211 further processes the digital baseband signal or the digital intermediate frequency signal, for example, performs demodulation processing and decoding processing. In addition, the transmitter machine Tx of the transceiver 1213 is further configured to: receive a modulated digital baseband signal or digital intermediate frequency signal from the processor 1211, convert the modulated digital baseband signal or digital intermediate frequency signal into a radio frequency signal, and send the radio frequency signal through the one or more antennas 1215. Specifically, the receiver machine Rx may selectively perform one-level or multi-level frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter machine Tx may selectively perform one-level or multi-level frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

The transceiver 1213 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver machine, an input port, a receiving circuit, or the like. The sending unit may be referred to as a transmitter machine, a transmitter, a transmitting circuit, or the like.

It should be noted that, the communication apparatus 1200 shown in FIG. 12 may be specifically configured to implement steps implemented by the network device in the foregoing method embodiments, and implement technical effect corresponding to the network device. For a specific implementation of the communication apparatus 1200 shown in FIG. 12, refer to the descriptions in the foregoing method embodiments. Details are not enumerated herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) storing one or more computers. When the computer program product is executed by a processor, the processor performs the method in the possible implementations of the foregoing terminal device.

An embodiment of this application further provides a computer program product storing one or more computers. When the computer program product is executed by a processor, the processor performs the method in the possible implementations of the foregoing network device.

An embodiment of this application further provides a chip system. The chip system includes at least one processor, configured to support a communication apparatus in implementing functions in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device in the foregoing method embodiments.

An embodiment of this application further provides a chip system. The chip system includes at least one processor, configured to support a communication apparatus in implementing functions in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments.

An embodiment of this application further provides a communication system. The network system architecture includes the terminal device and the network device in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that may store program code, such as a USB flash drive, a removable hard disk, a read-only memory (ROM, Read-Only Memory), a random access memory (RAM, Random Access Memory), a magnetic disk, or an optical disc.

**Claims**

1. A communication method, comprising:

   obtaining, by a terminal device, artificial intelligence AI model information of a first network device; and
   determining, by the terminal device, AI performance information of the first network device based on the AI model information of the first network device.

2. The method according to claim 1, wherein the determining, by the terminal device, AI performance information of the first network device based on the AI model information of the first network device comprises:

   obtaining, by the terminal device, first data, wherein the first data is local data of the terminal device or the first data is data generated based on a first signal from the first network device; and
   determining, by the terminal device, the AI performance information of the first network device based on the AI model information of the first network device and the first data.

3. The method according to claim 1 or 2, wherein the method further comprises:

   obtaining, by the terminal device, AI model information of a second network device; and
   determining, by the terminal device, AI performance information of the second network device based on the AI model information of the second network device.

4. The method according to claim 3, wherein the obtaining, by the terminal device, AI model information of a second network device comprises:
   when a value of the AI performance information of the first network device is less than a first threshold, obtaining, by the terminal device, the AI model information of the second network device.

5. The method according to claim 3 or 4, wherein the determining, by the terminal device, AI performance information of the second network device based on the AI model information of the second network device comprises:

   obtaining, by the terminal device, second data, wherein the second data is local data of the terminal device or the second data is data generated based on a second signal from the second network device; and
   determining, by the terminal device, the AI performance information of the second network device based on the AI model information of the second network device and the second data.

6. The method according to any one of claims 3 to 5, wherein the first network device is a network device in which a serving cell of the terminal device is located; and
   the terminal device performs cell reselection when any one of the following items is met:

   a value of the AI performance information of the second network device is greater than the value of the AI performance information of the first network device;
   the value of the AI performance information of the first network device is less than the first threshold and a value of the AI performance information of the second network device is greater than a second threshold; or
   a value of the AI performance information of the second network device is greater than a second threshold.

7. The method according to any one of claims 3 to 6, wherein the method further comprises:
   sending, by the terminal device, first information to the first network device, wherein the first information comprises at least one of the following items:

   the AI performance information of the first network device;
   the AI performance information of the second network device; or
   relative information between the AI performance information of the first network device and the AI performance information of the second network device.

8. The method according to any one of claims 3 to 7, wherein the determining, by the terminal device, AI performance information of the second network device based on the AI model information of the second network device comprises: when the value of the AI performance information of the first network device is less than the first threshold, determining, by the terminal device, the AI performance information of the second network device based on the AI model information of the second network device.

9. A communication method, comprising:

    determining, by a first network device, AI model information of the first network device, wherein the AI model information of the first network device is used to determine AI performance information of the first network device; and
    sending, by the first network device, the AI model information of the first network device.

10. The method according to claim 9, wherein the method further comprises:
    receiving, by the first network device, first information, wherein the first information comprises at least one of the following items:

    the AI performance information of the first network device;
    AI performance information of a second network device; or
    relative information between the AI performance information of the first network device and AI performance information of a second network device.

11. The method according to claim 10, wherein the first network device sends a handover request message when any one of the following items is met:

    a value of the AI performance information of the second network device is greater than a value of the AI performance information of the first network device;
    a value of the AI performance information of the first network device is less than a first threshold and a value of the AI performance information of the second network device is greater than a second threshold; or
    a value of the AI performance information of the second network device is greater than a second threshold.

12. The method according to any one of claims 9 to 11, wherein the method further comprises:
    sending, by the first network device, a first signal, wherein the first signal is used to generate first data, and the first data is used to determine the AI performance information of the first network device.

13. The method according to any one of claims 2 to 12, wherein the first data comprises at least one of the following items: input data or label data.

14. The method according to any one of claims 1 to 13, wherein the AI model information comprises at least one of the following items:
    weight information or bias information.

15. The method according to any one of claims 1 to 14, wherein the AI performance information comprises at least one of the following items:
    inference accuracy information, data distribution information, label distribution information, model prediction distribution information, or data importance information.

16. The method according to claim 15, wherein the data importance information comprises at least one of a weight change, a difference, or a gradient for AI model training using the data.

17. A communication method, comprising:

    determining, by a terminal device, data relative information between first data and second data, wherein the first data is data generated based on a first signal from a first network device, and the second data is data generated based on a second signal from a second network device; and
    sending, by the terminal device, first indication information, wherein the first indication information indicates the data relative information.

18. A communication method, comprising:

receiving, by a first network device, first indication information from a terminal device, wherein the first indication information indicates data relative information between first data and second data, the first data is data generated based on a first signal from the first network device, and the second data is data generated based on a second signal from a second network device; and

determining, by the first network device, AI area information of the first network device and AI area information of the second network device based on the data relative information indicated by the first indication information.

19. The method according to claim 18, wherein the determining, by the first network device, AI area information of the first network device and AI area information of the second network device based on the data relative information comprises:
locally configuring, by the first network device, the AI area information of the first network device and the AI area information of the second network device based on the data relative information.

20. The method according to claim 18, wherein the determining, by the first network device, AI area information of the first network device and AI area information of the second network device based on the data relative information comprises:

sending, by the first network device, the data relative information to another network device; and
receiving, by the first network device, second indication information from the another network device, wherein the second indication information indicates the AI area information of the first network device and the AI area information of a second network device.

21. The method according to any one of claims 17 to 20, wherein the data relative information comprises at least one of a data distribution distance or a data similarity.

22. The method according to any one of claims 17 to 21, wherein the first network device is a network device in which a serving cell of the terminal device is located.

23. A communication apparatus, comprising a transceiver unit and a processing unit, wherein

the transceiver unit is configured to obtain AI model information of a first network device; and
the processing unit is configured to determine AI performance information of the first network device based on the AI model information of the first network device.

24. The apparatus according to claim 23, wherein the processing unit is specifically configured to:

obtain first data, wherein the first data is local data of the communication apparatus or the first data is data generated based on a first signal from the first network device; and
determine the AI performance information of the first network device based on the AI model information of the first network device and the first data.

25. The apparatus according to claim 23 or 24, wherein

the transceiver unit is further configured to obtain AI model information of a second network device; and
the processing unit is further configured to determine AI performance information of the second network device based on the AI model information of the second network device.

26. The apparatus according to claim 25, wherein the processing unit is specifically configured to:
when determining that a value of the AI performance information of the first network device is less than a first threshold, control the transceiver unit to obtain the AI model information of the second network device.

27. The apparatus according to claim 25 or 26, wherein the processing unit is specifically configured to:

obtain second data, wherein the second data is local data of the communication apparatus or the second data is data generated based on a second signal from the second network device; and
determine the AI performance information of the second network device based on the AI model information of the second network device and the second data.

**28.** The apparatus according to any one of claims 25 to 27, wherein the first network device is a network device in which a serving cell of the communication apparatus is located; and
the processing unit is further configured to perform cell reselection when any one of the following items is met:

a value of the AI performance information of the second network device is greater than the value of the AI performance information of the first network device;
the value of the AI performance information of the first network device is less than the first threshold and a value of the AI performance information of the second network device is greater than a second threshold; or
a value of the AI performance information of the second network device is greater than a second threshold.

**29.** The apparatus according to any one of claims 25 to 28, wherein
the transceiver unit is further configured to send first information to the first network device, wherein the first information comprises at least one of the following items:

the AI performance information of the first network device;
the AI performance information of the second network device; or
relative information between the AI performance information of the first network device and the AI performance information of the second network device.

**30.** The apparatus according to any one of claims 25 to 29, wherein the processing unit is specifically configured to:
when the value of the AI performance information of the first network device is less than the first threshold, determine the AI performance information of the second network device based on the AI model information of the second network device.

**31.** A communication apparatus, comprising a processing unit and a transceiver unit, wherein

the processing unit is configured to determine AI model information of a first network device, wherein the AI model information of the first network device is used to determine AI performance information of the first network device; and
the transceiver unit is configured to send the AI model information of the first network device.

**32.** The apparatus according to claim 31, wherein
the transceiver unit is further configured to receive first information, wherein the first information comprises at least one of the following items:

the AI performance information of the first network device;
AI performance information of a second network device; or
relative information between the AI performance information of the first network device and AI performance information of a second network device.

**33.** The apparatus according to claim 32, wherein the transceiver unit is further configured to send a handover request message when any one of the following items is met:

a value of the AI performance information of the second network device is greater than a value of the AI performance information of the first network device;
a value of the AI performance information of the first network device is less than a first threshold and a value of the AI performance information of the second network device is greater than a second threshold; or
a value of the AI performance information of the second network device is greater than a second threshold.

**34.** The apparatus according to any one of claims 31 to 33, wherein
the transceiver unit is further configured to send a first signal, wherein the first signal is used to generate first data, and the first data is used to determine the AI performance information of the first network device.

**35.** The apparatus according to any one of claims 24 to 34, wherein the first data comprises at least one of the following items: input data or label data.

**36.** The apparatus according to any one of claims 25 to 35, wherein the AI model information comprises at least one of the following items:

weight information or bias information.

37. The apparatus according to any one of claims 25 to 36, wherein the AI performance information comprises at least one of following items:
inference accuracy information, data distribution information, label distribution information, model prediction distribution information, or data importance information.

38. The apparatus according to claim 37, wherein the data importance information comprises at least one of a weight change, a difference, or a gradient for AI model training using the data.

39. A communication apparatus, comprising a processing unit and a transceiver unit, wherein

the processing unit is configured to determine data relative information between first data and second data, wherein the first data is data generated based on a first signal from a first network device, and the second data is data generated based on a second signal from a second network device; and
the transceiver unit is configured to send first indication information, wherein the first indication information indicates the data relative information.

40. A communication apparatus, comprising a processing unit and a transceiver unit, wherein the transceiver unit is configured to receive first indication information from a terminal device, wherein the first indication information indicates data relative information between first data and second data, the first data is data generated based on a first signal from a first network device, and the second data is data generated based on a second signal from a second network device; and
the processing unit is configured to determine AI area information of the first network device and AI area information of the second network device based on the data relative information indicated by the first indication information.

41. The apparatus according to claim 40, wherein the processing unit is specifically configured to locally configure the AI area information of the first network device and the AI area information of the second network device based on the data relative information.

42. The apparatus according to claim 40, wherein

the transceiver unit is further configured to send the data relative information to another network device; and
the transceiver unit is further configured to receive second indication information from the another network device, wherein the second indication information indicates the AI area information of the first network device and the AI area information of the second network device.

43. The apparatus according to any one of claims 39 to 42, wherein the data relative information comprises at least one of a data distribution distance or a data similarity.

44. The apparatus according to any one of claims 39 to 43, wherein the first network device is a network device in which a serving cell of the terminal device is located.

45. A communication apparatus, comprising at least one processor, wherein the at least one processor is coupled to a memory, and

the memory is configured to store a program or instructions; and
the at least one processor is configured to execute the program or the instructions, so that the apparatus implements the method according to any one of claims 1 to 22.

46. The apparatus according to claim 45, wherein the apparatus further comprises the memory.

47. A computer-readable storage medium, wherein the readable storage medium stores instructions; and when the instructions are executed by a computer, the method according to any one of claims 1 to 22 is performed.

48. A computer program product, wherein the program product comprises instructions; and when the instructions are run on a computer, the method according to any one of claims 1 to 22 is performed.

49. A chip system, comprising at least one processor, wherein the processor is configured to support a communication apparatus in implementing a function implemented by the method according to any one of claims 1 to 22.

50. The chip system according to claim 49, wherein the chip system further comprises a memory, and the memory is configured to store program instructions and/or data of the communication apparatus.

51. A communication system, wherein the communication system comprises the apparatus according to any one of claims 23 to 30 and the apparatus according to any one of claims 31 to 38; or the communication system comprises the apparatus according to claim 39 and the apparatus according to any one of claims 40 to 44.

FIG. 1

Indicates: a terminal device

Indicates: data required for training and/or an AI inference result

Indicates: AI model information

Indicates: a network device

FIG. 2a

Model downloading

Inference

FIG. 2b

FIG. 2c

Input layer          Hidden layer          Output layer

FIG. 3a

FIG. 3b

FIG. 3c

FIG. 4

FIG. 5

☐    Indicates: a terminal device

◯    Indicates: an AI area

⬡    Indicates: a service scope of a network device

FIG. 6a

Network device 1

Network device 2

Download AI model information

Re-download AI model information

Terminal device

Terminal device

Move

FIG. 6b

Terminal device

First network device

S701: Determine data relative information between first data and second data

S702: First indication information

FIG. 7

FIG. 8

900

Communication apparatus

901

Processing unit

902

Transceiver
unit

FIG. 9

1000

Communication apparatus

1001

Logic circuit

1002

Input/Output
interface

FIG. 10

EP 4 451 744 A1

FIG. 11

FIG. 12

| INTERNATIONAL SEARCH REPORT | International application No. |
| --- | --- |
| | **PCT/CN2022/142602** |

**A. CLASSIFICATION OF SUBJECT MATTER**

H04W48/08(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS, CNTXT, CNKI, VEN, WOTXT, EPTXT, USTXT, 3GPP: 用户终端, 网络设备, 人工智能, 模型, 性能, 能力, 小区, 切换, 重选, 数据相对信息, 分布距离, 相似度, AI区域, UE, network device, artificial intelligence, AI, model, performance, cell, handover, reselect, data relative information, distributed distance, similarity, AI region

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113923730 A (SPREADTRUM COMMUNICATIONS (SHANGHAI) CO., LTD.) 11 January 2022 (2022-01-11) description, paragraphs [0144]-[0159], [0188], [0311] and [0319] | 1-16, 23-38, 45-51 |
| A | CN 111837425 A (BEIJING XIAOMI MOBILE SOFTWARE CO., LTD.) 27 October 2020 (2020-10-27) description, paragraphs [0096]-[0099] and [0180]-[0190] | 1-51 |
| A | US 2021099942 A1 (SAMSUNG ELECTRONICS CO., LTD.) 01 April 2021 (2021-04-01) entire document | 1-51 |
| A | ERICSSON. "R3-206437 "AI/ML based Use Cases"" *3GPP tsg_ran\wg3_iu*, No. tsgr3_110-e, 22 October 2020 (2020-10-22), entire document | 1-51 |
| A | HUAWEI-MODERATOR. "R3-206874 "CB: # 26_EnhDataColl_UseCases-Summary of email discussion"" *3GPP tsg_ran\wg3_iu*, No. tsgr3_110-e, 17 November 2020 (2020-11-17), entire document | 1-51 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **15.2月2023(15.02.2023)** | **10 March 2023** |
| Name and mailing address of the ISA/CN | Authorized officer |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

| International application No. |
| --- |
| **PCT/CN2022/142602** |

| Patent document cited in search report | | | Publication date (day/month/year) | Patent family member(s) | | | Publication date (day/month/year) |
| --- | --- | --- | --- | --- | --- | --- | --- |
| CN | 113923730 | A | 11 January 2022 | WO | 2022007579 | A1 | 13 January 2022 |
| CN | 111837425 | A | 27 October 2020 | WO | 2021248371 | A1 | 16 December 2021 |
| US | 2021099942 | A1 | 01 April 2021 | EP | 4011123 | A1 | 15 June 2022 |
| | | | | EP | 4011123 | A4 | 21 September 2022 |
| | | | | WO | 2021060955 | A1 | 01 April 2021 |

Form PCT/ISA/210 (patent family annex) (July 2022)

**EP 4 451 744 A1**

## REFERENCES CITED IN THE DESCRIPTION

### Patent documents cited in the description

- CN 202111669057